# EUROPEAN PATENT APPLICATION

(11) **EP 0 697 616 A2**
(43) Date of publication of application: **21.02.1996**
(21) Application number: 95112880.0
(22) Date of filing: 16.08.1995
(51) Int. Cl.: G02F 1/19, G02F 1/07

(54) **Electro-optical fluid composition, device, and fabrication method thereof**

(30) Priority: 16.08.1994 JP 192633/94; 17.08.1994 JP 193435/94; 17.08.1994 JP 193448/94
(71) Applicant: FUJIKURA LTD., Koto-ku Tokyo (JP); FUJIKURA KASEI CO., LTD., Itabashi-Ku Tokyo-To (JP)
(72) Inventor: Edamura, Kazuya, Minato-ku, Tokyo (JP); Otsubo, Yasufumi, Inage-ku, Chiba-ken (JP); Akashi, Kazuya, Inbagun, Chiba-ken (JP); Sasaki, Ken, Funabashi-shi, Chiba-ken (JP); Okamura, Keita, Koshigaya-shi, Saitama-ken (JP)
(74) Representative: Grünecker, Kinkeldey, Stockmair & Schwanhäusser Anwaltssozietät

(57) **Abstract**

An Electro-optical Fluid composition (41 and42 or 716, 1116) has an electrically insulating medium (41, 719, 1119) and solid particles (42, 730, 1130) having an electric alignment within the electrically insulating medium. A device for controlling the amount of light transmission has a hollow storage member (718, 1118) of which at least one part of two opposing surfaces is transparent, for storing the above optically-functional fluid composition and a transparent conductive layer (510, 717, 1125, 1126, 1127) of which at least the transparent portion of the hollow storage member (718, 1118) is covered. The methods to use the device is disclosed.

## Description

### BACKGROUND OF THE INVENTION

### 1. Field of the Invention

The present invention relates to an Electro-optical Fluid composition, a device, and fabrication method thereof which can control amount of light transmission based on an Electric Alignment (EA or EA effect) when an electric field is applied, and, in particular, to an Electro-optical Fluid composition containing solid particles (hereinafter referred to as EA particles) having the EA effect throughout an electrically insulating medium.

### 2. Description of the Prior Art

Conventionally, liquid crystal compositions, electrochromical compositions, and the like have been commonly known as Electro-optical Fluid compositions wherein the optical characteristics such as amount of light transmission can be controlled by applying of an electric field.

These are materials with optically functional characteristics wherein, when an electric field is applied on such a composition contained between two separated sheets of transparent electrodes, the polarizing characteristics of the transmitted light are changed in the case of a liquid crystal composition, while specific wave lengths of the transmitted light are absorbed in the case of an electrochromical composition, and the like.

These compositions are used extensively as surface light modulating shutters for window glass and the like, and as various types of display devices, utilizing these characteristics.

In addition, conventionally, a device such as disclosed in Japanese Laid-Open Patent Application No. 4-31833, wherein a light-adjusting device formed from electrochromic elements is incorporated into window glass, and a uniform voltage is applied to the light-adjusting device to vary the ratio of sunlight transmitted through the window glass, is known as an example of a device for controlling the amount of light transmission.

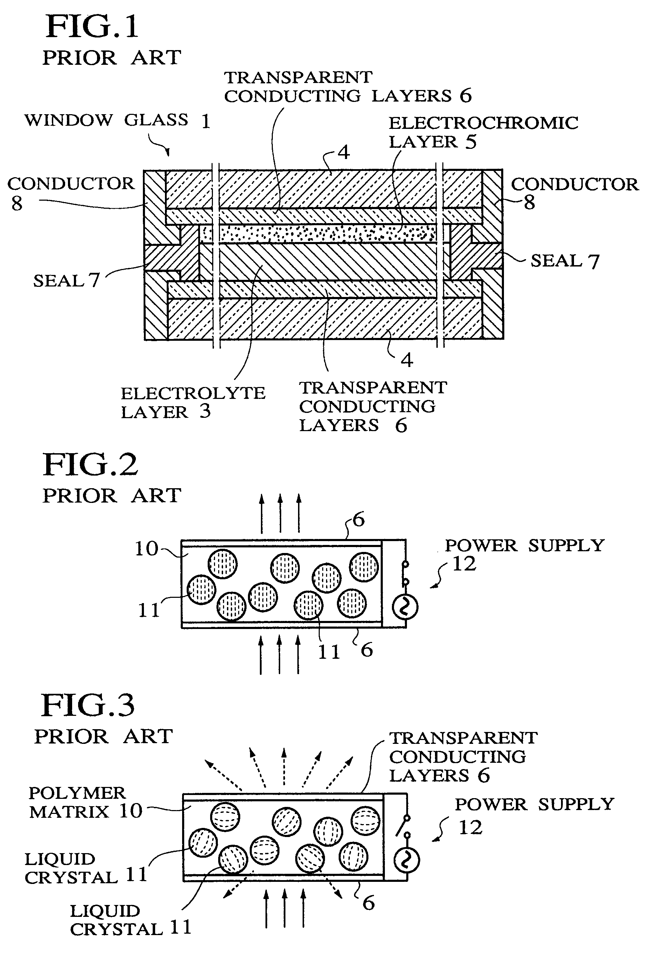

FIG. 1 shows one configuration of a window for controlling sunlight described in the above-mentioned Japanese Laid-Open Patent Application No. 4-31833. In this conventional example, in a window glass 1 used in this window for controlling sunlight, an electrochromic element layer 5 is laminated onto an electrolyte layer 3 interposed between an upper and lower glass substrates 4, each of which is provided with a transparent conducting layer 6, with seals 7, provided, one at each end of the electrolyte layer 3 and the electrochromic element layer 5. In addition, a conducting member 8 is formed at both ends of each of these members. In addition, liquid crystals 11 in large numbers are dispersed within a polymer matrix 10, as shown in FIG.2 and FIG.3.

In the sunlight-controlling glass of the window glass 1 formed as described above and as shown in FIG.2, moleculars in liquid crystals 11 are systematically arranged by applying an electric field from a power supply 12 to the liquid crystals 11 through the transparent conducting layers 6. As a result, the transmissivity of the window glass 1 can be increased so that the amount of light transmission is increased.

As shown in FIG.3, the alignment of the electrons in the liquid crystals 11 is made random by interrupting the supply of electricity from the electrode 12, and the light is scattered so that the amount of light transmitted is decreased. Accordingly, using the conventional configuration illustrated in FIG.1, if the passage of electricity to the conducting layers 6 is controlled according to the strength of the sunlight, the passage of the sunlight can be controlled.

However, there are specific problems associated with conventional Electro-optical Fluid compositions. For example, an associate member such as a polarizing film is required when a display device is manufactured in the case of a liquid crystal composition. In addition, the spacing between the transparent electrodes must be strictly controlled and the like, and along with increasing the display area from many main causes the product becomes very high priced.

In addition, the response is slow and a kind of the color is fixed in the case of an electrochromic composition.

In addition, in the above-mentioned conventional sunlight control window, in the case of continuous use it is normally necessary that the same voltage be applied continuously because the liquid crystals 11 are used to increase and decrease the amount of light transmitted. There is therefore a problem that the cost of power is high under continuous use.

In addition, because the liquid crystals 11 are used in the passage and diffusion of the light, specific wave lengths of the liquid crystals themselves are absorbed so that there is the problem that the transmitted light is colored. Also, because light absorption characteristics at specific frequencies exists in this manner, there is the problem that amount of light transmitted cannot be uniformly regulated over the total wavelength range of the light.

Conventionally, a composition referred to as Electro-optical Fluid is commonly known. Such a composition is a fluid in which solid particles can be dispersed throughout a medium with, for example, electrical resistance properties. When an electric field is applied to this composition the viscosity of the composition shows a striking increase, and, in some cases the composition has hardening properties. This fluid composition has a so-called electric alignment (hereinafter referred to as an EA effect). Because this composition generates a high, stable resistance to shear flow upon the application of an electric field, practical application can be expected for power transmission or braking or the like of electrically controlled apparatuses such as clutches, dampers, shock absorbers, valves, actuators, vibrators, printers, or oscillating elements and the like.

With this EA effect, when the composition is interposed between electrodes and an electric voltage is applied, the solid particles dispersed throughout the composition are polarized by the action of the electric field produced between the electrodes. The particles also exhibit a mutually coordinated linking in the direction of the electric field resulting from electrostatic attraction based on the polarization, therefore, as a result, these particles resisting any external shearing flow force.

However, the optical action of this Electro-optical Fluid composition is commonly known.

The inventors of the present invention have carried out research into electric alignment of optically-functional fluid compositions which can be used in clutches, dampers, or oscillating elements for apparatuses for power transmission or for control and the like.

Conventionally, a composition referred to as an Electro-optical Fluid (hereinafter an EA fluid) is commonly known. Such a composition is a fluid in which solid particles can be dispersed throughout a medium with, for example, electrical insulation properties, being a fluid composition with the so-called Electric Alignment (EA effect). When an external electric field is applied to this composition the viscosity of the composition shows a striking increase, and, in some cases solidification of the composition is caused. This type of EA effect is known as the Winslow effect. When the composition is filled between electrodes and an electric voltage is applied to the electrodes, the solid particles dispersed throughout the composition are polarized by the action of the electric field produced between the electrodes. The particles also exhibit a mutually coordinated linking in the direction of the electric field from electrostatic attraction based on the polarization, resulting in these particles resisting any external shearing flow force.

Because, as outlined above, the EA fluid exhibits the EA effect practical application is expected for power transmission or control or the like of electrically controlled apparatuses such as clutches, dampers, shock absorbers, valves, actuators, vibrators, printers, or oscillating elements and the like.

However, there are many problems associated with conventionally-known EA fluids. Examples of conventional EA fluids which are commonly known include solid particles which retain water on their surfaces, such as particles of silicagel, cellulose, starch, soy casein, polystyrene-related ion exchange resins and the like dispersed throughout an electrically insulating oil such as silicone oil, diphenyl chloride, or transformer oil or the like. However, the insulating power with respect to external shear flow under applying a power supply (hereinafter, called as shear resistance) is inadequate for these fluids, or a high voltage must be imposed, so that the power costs are high.

An abnormal current flows when the particles migrate, and condense on one of the electrodes, depending on the hygroscopicity of the solid particles. Also, there is also limited stability under storage. In addition, water adhering to the particles disassociates and evaporates when heated, therefore the electric alignment characteristics (hereinafter, EA characteristics) change because the water content of the particles changes. Accordingly, there is the problem that heat resistance and resistance to moisture and the like are very low.

Accordingly, for example, a device which uses an inorganic solid particle with a low degree of electrical conductivity including a semiconductor (as reported in Japanese Laid-Open Patent Application No. 2-91194), as well as a device which uses particles of an inorganic ion exchange substance made from hydroxides of multivalent metals, types of hydrotalcites, acid salts of multivalent metals, hydroxyapatite, nashicon-type compounds, clay minerals, potassium titanate, heteropoly salts, or insoluble ferrocyanides (as reported in Japanese Laid-Open Patent Application No. 3-200897), have been proposed.

However, precipitation occurs with the passage of time because these inorganic solid particles exhibit a large difference in specific gravity in the insulating oils which are the dispersion medium, and the precipitated particles cohere to the extent that redispersion is not easy, and the like, so that there is a lack of stability in storage.

Also, because of the extreme hardness there is the problem that the inorganic solid particles are subjected to abrasion because of friction between the particles and the electrodes which apply the voltage and the walls of the apparatus. In addition, because the powder produced by this abrasion is suspended throughout the EA fluid, the EA characteristics change during use. In some cases (or abruptly) an abnormally large current flows and there is the problem that the material shows very little ability to withstand wear and tear in operation.

In particular, there are devices in which the degree of electrical conductivity through the inorganic ion exchange substance is large. When such a device is used, there is the inconvenience that when electricity is supplied to the electrode an excess current flows through the EA fluid so that abnormal heating results and excess power is consumed. In addition, a material with a specific gravity of 1.2 or less used as core material for the solid particles. A substance has also been proposed which uses particles of a high molecular organic compound with an anion base or a cation base which can dissociate in water for coating this core material (as reported in Japanese Laid-Open Patent Application No. 3-162494). However, in this case, because the particles are hydrated, there is the problem that the degree of electrical conductivity and the polarizability changes when the temperature rises during use and the like, so that there is a change in the ratio of water contained, with the result that the EA characteristics of the composition change with the humidity of the environment.

With this type of background described above in detail, the inventors of the present invention have developed a revolutionary electric alignment of optically-functional fluid composition which can at one stroke solve the problems associated with the above-described conventional electric alignment of optically-functional fluid compositions. This electric alignment of optically-functional fluid composition comprises an inorganic/organic composite particle comprising a core comprising an organic polymeric compound and a shell comprising an inorganic ion exchangers, dispersed throughout an electrically insulating medium.

The inventors have previously filed a patent as shown under Japanese Laid-Open Patent Application No.5-324102.

The inventors of the present invention have also conducted research into electric alignment of optically-functional fluid compositions of a novel configuration and have discovered that the transmissivity of light changes when an electric field is imposed on this electric alignment of optically-functional fluid composition. The present invention has been achieved based on this discovery.

### SUMMARY OF THE INVENTION

An object of the present invention is to solve the above-mentioned problems by the provision of an optically functional fluid composition based on the EA effect.

An object of the present invention is, with due consideration to the drawbacks of such conventional devices and methods, to provide a revolutionary device and method for controlling amounts of light transmission wherein the amount of light transmitted can be regulated using an Electro-optical Fluid composition which can produce a completely novel action for controlling light transmission which is almost uniform over a wide range of wave lengths.

In accordance with one aspect of the present invention, there is provided an Electro-optical Fluid composition comprising:
an electrically insulating medium; and
solid particles having an electric alignment within the ally insulating medium.

In accordance with a further aspect of this embodiment, the solid particles comprise:
a core member comprising an organic polymeric compound; and
a surface layer (shell) comprising an inorganic material having an electric alignment.

In accordance with a further aspect of this embodiment, the Electro-optical Fluid composition above, the inorganic material having an electric alignment is of at least one type selected from a group made up of an inorganic ion exchange substance, silica gel, and an electro-semiconductive inorganic material.

In accordance with a further aspect of this embodiment, the surface layer is made up of a material containing an inorganic material having an electric alignment and colored particles.

In accordance with a further aspect of this embodiment, the core member contains a pigment.

In accordance with a further aspect of this embodiment, the electrically insulating medium comprises one of or mixture of diphenyl chloride, butyl sebacate, aromatic polycarbonate higher alcohol ester, halophenyl alkyl ether, transformer oils, paraffin chloride salts, fluorinated oils, or silicone oils or fluoro-silicone oils, or the like. Mixtures of these can also be used.

In accordance with a further aspect of this embodiment, a range of the kinematic viscosity of the electrically insulating medium is 10 to 1000 cSt.

In accordance with a further aspect of this embodiment, the concentration of the solid particles throughout the electrically insulating medium is in the range of 0.5 to 15 percent by weight.

In accordance with another aspect of the present invention, there is provided a device for controlling the amount of light transmission comprising:
an Electro-optical Fluid composition containing, within a medium, solid particles having an electric alignment;
a hollow storage member, of which at least one part of two opposing surfaces is transparent, for storing the Electro-optical Fluid composition; and
a transparent conductive layer of which at least the transparent portion of the hollow storage member is covered.

In accordance with another aspect of the present invention, there is provided a device for controlling the amount of light transmission comprising:
an Electro-optical Fluid composition formed from inorganic/organic composite particles comprising:
a core member comprising an organic polymeric compound; and
a surface layer (shell) comprising an inorganic material having an electric alignment, dispersed throughout an electrically insulating medium;
a hollow storage member, of which at least one part of two opposing surfaces is transparent, for storing the Electro-optical Fluid composition; and
a transparent conductive layer of which at least the transparent portion of the storage member is covered.

In accordance with another aspect of the present invention, there is provided a device for controlling the amount of light transmission comprising:
an Electro-optical Fluid composition formed from inorganic and organic composite particles comprising:
a core member comprising an organic polymeric compound; and
an outer layer (shell) made up of either an inorganic ion exchange substance or silica gel or an electro-semiconductive inorganic material dispersed throughout an electrically insulating medium;
a hollow storage member, of which at least one part of two opposing surfaces is transparent, for storing the Electro-optical Fluid composition; and
a transparent conductive layer of which at least the transparent portion of the storage member is covered.

In accordance with a further aspect of this embodiment, the storage member comprises:
a pair of transparent substrates opposedly positioned;
a sealing member forming a storage space between the transparent substrates by connecting the pair of transparent substrates; and
an electrode formed on the outer peripheral section of the transparent substrates;
wherein the transparent conductive layer is formed joined to the electrode section covering the surface relatively opposite the pair of opposing transparent substrates.

In accordance with a further aspect of this embodiment, the kinematic viscosity of the electrically insulating medium is in the range of 1 to 3000 cSt.

In accordance with a further aspect of this embodiment, the concentration of the solid particles throughout the electrically insulating medium is in the range of 0.5 to 15 percent by weight.

In accordance with a further aspect of this embodiment, the voltage applied to the particles throughout the Electro-optical Fluid composition from the transparent conductive layer is set in the range of 0.1 to 5.0 kV/mm.

In accordance with another aspect of the present invention, there is provided, a method for controlling the amount of light transmission for an Electro-optical Fluid composition containing, within a medium, solid particles having an electric alignment is stored inside the hollow storage member, of which at least one part is transparent, comprising:
applying an electric field to the Electro-optical Fluid composition to control the orientation of the solid medium particles in order to control the amount of light transmitted through the transparent portion of the storage member.

In accordance with another aspect of the present invention, there is provided a device for controlling the amount of light transmission comprising:
an Electro-optical Fluid composition containing, within an electrically insulating medium, solid particles having an electric alignment;
a hollow storage member, of which at least one part of two opposing surfaces is transparent, for storing the Electro-optical Fluid composition;
a transparent conductive layer of which at least the transparent portion of the hollow storage member is covered,
wherein one or more standard transparent conducting layers on one surface of the storage member are subdivided; one or more opposing transparent conducting layers oppose the standard transparent conducting layers on the other surface of the storage member; one or more non-opposing transparent conducting layers is formed on a part which does not form an opposing transparent conducting layer on the other surface of the storage member; and
a switch for switching a supply of electricity to the standard transparent conducting layer and the opposing transparent conducting layers, or a supply of electricity to the standard transparent conducting layer and the non-opposing transparent conducting layers.

In accordance with another aspect of the present invention, there is provided, a device for controlling the amount of light transmission comprising:
an Electro-optical Fluid composition formed from inorganic/organic composite particles comprising a core member comprising an organic polymeric compound and an outer layer (shell) comprising an inorganic material having an electric alignment, dispersed throughout an electrically insulating medium;
a hollow storage member, of which at least one part of two opposing surfaces is transparent, for storing the Electro-optical Fluid composition; and a transparent conductive layer of which at least the transparent portion of the storage member is covered, wherein one or more standard transparent conducting layers on one surface of the storage member are subdivided, one or more opposing transparent conducting layers opposes the standard transparent conducting layers on the other surface of the storage member, one or more non-opposing transparent conducting layers is formed on a part which does not form an opposing transparent conducting layer on the other surface of the storage member; and
a switch for switching a supply of electricity to the standard transparent conducting layer and the opposing transparent conducting layers or a supply of electricity to the standard transparent conducting layer and the non-opposing transparent conducting layers.

In accordance with another aspect of the present invention, there is provided a device for controlling the amount of light transmission comprising:
an Electro-optical Fluid composition formed from inorganic/organic composite particles comprising a core member comprising an organic polymeric compound and an outer layer (shell) comprising either an inorganic ion exchange substance or silica gel or an electro-semiconductive inorganic material;
a hollow storage member, of which at least one part of two opposing surfaces is transparent, for storing the Electro-optical Fluid composition; and
a transparent conductive layer of which at least the transparent portion of the storage member is covered wherein one or more standard transparent conducting layers on one surface of the storage member are subdivided; one or more opposing transparent conducting layers opposes the standard transparent conducting layers on the other surface of the storage member; one or more non-opposing transparent conducting layers is formed on a part which does not form an opposing transparent conducting layer on the other surface of the storage member; and
a switch for switching a supply of electricity to the standard transparent conducting layer and the opposing transparent conducting layers or a supply of electricity to the standard transparent conducting layer and the non-opposing transparent conducting layers.

In accordance with a further aspect of this embodiment, the storage member comprises:
a pair of transparent substrates opposedly positioned; and
a sealing member forming a storage space between the transparent substrates by connecting the pair of transparent substrates, wherein the transparent conductive layer is formed on a surface relatively opposing the pair of opposing transparent substrates.

In accordance with a further aspect of this embodiment, the standard transparent conducting layer is a comb-shaped conducting layer covering a transparent portion of one surface of the storage member;
the opposing transparent conducting layers are comb-shaped conducting layers covering a transparent portion of another surface of the storage member; and
the non-opposing transparent conducting layers are comb-shaped conducting layers covering and mutually engaging the opposing transparent conducting layers.

In accordance with another aspect of the present invention, there is provided a method for controlling the amount of light transmission wherein the Electro-optical Fluid composition containing, throughout an electrically insulating medium, solid particles having an electric alignment is stored in the hollow storage member, of which at least one part of two opposing surfaces is transparent, comprising:
applying an electric field to the Electro-optical Fluid composition; and
controlling the amount of light transmitted through the transparent portion of the storage member by controlling the orientation of the solid medium particles, wherein
by applying a positive potential to one and by applying a negative potential to the other of the two opposing surfaces, and solid particles are oriented in parallel in the direction of the light transmission at the two opposing surfaces, or, by applying partially a positive potential to one and by partially applying a negative potential to the other of the two opposing surfaces, mutually impressed and positioned, and the solid particles are oriented between the two opposing surfaces in a slanting direction with respect to the direction of light transmission.

In accordance with another aspect of the present invention, there is provided, a method for controlling the amount of light transmission wherein the Electro-optical Fluid composition wherein inorganic/organic composite particles comprising a core member comprising an organic polymeric compound and a shell comprising an inorganic material having an electric alignment effect, is stored inside the hollow storage member, of which at least one part of two opposing surfaces is transparent, comprising:
applying an electric field to the Electro-optical Fluid composition; and
controlling the amount of light transmitted through the transparent portion of the storage member by controlling the orientation of the solid medium particles, wherein
by applying a positive potential to one and a negative potential and to the other of the two opposing surfaces, and solid particles are oriented in parallel in the direction of the light transmission at the two opposing surfaces, or, by applying partially a positive potential to one and applying partially a negative potential to the other of the two opposing surfaces, mutually impressed and positioned, and the solid particles are oriented between the two opposing surfaces in a slanting direction with respect to the direction of light transmission.

In accordance with another aspect of the present invention, there is provided, a method for controlling the amount of light transmission wherein the Electro-optical Fluid composition wherein inorganic/organic composite particles comprising a core member comprising an organic polymeric compound and an outer layer (shell) comprising an inorganic ion exchange substance, is stored inside the hollow storage member, of which at least one part of two opposing surfaces is transparent;
applying an electric field to the Electro-optical Fluid composition; and
controlling the amount of light transmitted through the transparent portion of the storage member by controlling the orientation of the solid medium particles; and
by applying a positive potential to one and by applying a negative potential to the other of the two opposing surfaces, and solid particles are oriented in parallel in the direction of the light transmission at the two opposing surfaces, or, by applying partially a positive potential to one and by applying partially a negative potential the other of the two opposing surfaces, mutually impressed and positioned, and the solid particles are oriented between the two opposing surfaces in a slanting direction with respect to the direction of light transmission.

The above-mentioned conventional problems can be solved by the present invention of an Electro-optical Fluid composition containing, within an electrically insulating medium, solid particles (EA particles) having an EA effect. These EA particles are preferably inorganic/organic composite particles comprising a core member comprising an organic polymeric compound and a surface layer (shell) containing an inorganic material (EA inorganic material). The EA inorganic material is preferably is of at least one type selected from a group made up of an inorganic ion exchange substance, silica gel, and an electro-semiconductive inorganic material.

The surface layer of the inorganic/organic composite particles may include a material containing the EA inorganic material and colored particles. In addition, the core member may contain a pigment. In the case where the EA inorganic material is an inorganic ion exchange substance, the inorganic ion exchange substance is preferably of at least one type selected from a group made up of hydroxides of multivalent metals, types of hydrotalcite, acid salts of multivalent metals, hydroxyapatite, nashicon-type compounds, clay minerals, potassium titanate, heteropoly salts, and insoluble ferrocyanides.

In the case where the EA inorganic material is an electro-semiconductive inorganic material, the electro-semiconductive inorganic material preferably has an electric conductivity in the range of 10³ Ω⁻¹cm⁻¹ to 10⁻¹¹ Ω⁻¹cm⁻¹ at room temperature. The electro-semiconductive inorganic material is preferably of at least one type selected from a group made up of metal oxides, metal hydroxides, hydroxides of metal oxides, inorganic ion exchange substances, or such materials subjected to doping with at least one type of metal, and where the existence of metal doping is immaterial, and materials wherein at least one type of the above is provided as an electro-semiconductive layer on another support member.

The electrically insulating medium is preferably one with a kinematic viscosity in the range of 1 cSt to 3000 cSt. This electrically insulating medium may be either colorless and transparent or colored. In addition, it is possible to use a material with an optional color using a dye.

In addition, the concentration of solid particles throughout the electrically insulating medium is preferably in the range of 0.5 wt% to 15 wt%. In the EA composition, the EA particles which are dispersed without an electric field being imposed are seen to be opaque because the light is reflected and not transmitted, but when an electric field is imposed the EA particles throughout the composition exhibit a coordinated linking as a chain and form chain members. The chain members are aligned in parallel in the direction of the electric field, therefore light is clearly seen to be transmitted through the openings so formed.

In addition, in the present invention an Electro-optical Fluid composition of a special structure is filled into a hollow storage member.

When an electric field is applied to this Electro-optical Fluid composition by applying electric power to a transparent electrode which is covered by the transparent section of this storage member, particles of an inorganic/organic compound and the like contained in the Electro-optical Fluid composition are oriented in a specific direction. It is therefore possible to regulate the amount of light passing through the transparent section of the storage member.

One part or all of the storage member may be transparent.

In a device for use as described above, more specifically, the Electro-optical Fluid composition is interposed between a pair of transparent substrates which form a transparent conductive layer and can be used to provide an electrode section provided on the outer peripheral section of the transparent conductive layer. Using this configuration the device for controlling the amount of transmitted light is provided in plate form. The kinematic viscosity of the electrical insulating medium of the optically functional fluid composition used in this device can be in the range of from 1 to 3000 10 cSt. The concentration of the inorganic/organic composite particles in the electrical insulating medium can be in the range of 0.5 to 15% by weight.

The voltage applied to the inorganic/organic composite particles in the Electro-optical Fluid composition from the transparent conductive layer can be set in the range of 0.1 to 5.0 kV/mm. By setting the kinematic viscosity in this range, a desirable light transmission control performance can be demonstrated.

### BRIEF DESCRIPTION OF THE DRAWINGS

These and other objects, features, and advantages of the present invention will become more apparent from the following description of the preferred embodiments taken in conjunction with the accompanying drawings, in which:
FIG.1 is a sectional view showing one configuration of an embodiment of a conventional device as disclosed in Japanese Laid-Open Patent Application No. 4-31833.
FIG.2 is an explanatory drawing showing the light transmission during orientation control of the liquid crystals in the conventional configuration shown in FIG.1.
FIG.3 is an explanatory drawing showing the light transmission in the conventional configuration shown in FIG. 1 when the orientation of the liquid crystals is not controlled.
FIG.4 is a sectional view showing a first embodiment of an EA composition of the present invention.
FIG.5 is a sectional view showing the situation when the electrical power to the EA composition shown in FIG.4 of the present invention is turned OFF.
FIG.6 is a sectional view showing the situation when the electrical power to the EA composition shown in FIG. 1 of the present invention is turned ON.
FIG.7 is a sectional view showing a second embodiment of a device for controlling the amount of light transmission, relating to the present invention.
FIG.8 is a sectional view showing one example of inorganic/organic composite particles used in this device.
FIG.9 is an explanatory diagram showing the state of dispersion of inorganic and organic composite particles, when in a non-electrified state, for a transparent conductive layer of the device for controlling the amount of light transmission illustrated in FIGs. 7 and 8.
FIG. 10 is an explanatory diagram showing the state of dispersion of inorganic and organic composite particles, when in an electrified state, for a transparent conductive layer of the device for controlling the amount of light transmission illustrated in FIGs. 7 and 8.
FIG. 11 is a sectional view showing a third embodiment of a device for controlling the amount of light transmission, relating to the present invention.
FIG. 12 is a sectional view showing one example of inorganic and organic composite particles used in this device.
FIG. 13 is a perspective view showing a transparent substrate and a standard transparent conducting layer on the upper part of the light transmission control device shown in FIG. 11.
FIG. 14 is a perspective view showing a transparent substrate and an opposing transparent conducting layer and a non-opposing transparent conducting layer on the lower part of the light transmission control device shown in FIG. 11.
FIG. 15 is a sectional view showing the conditions under which a storage member is transparent when electricity is supplied to the standard transparent conducting layer and the opposing transparent conducting layer to align the particles.
FIG. 16 is a sectional view showing the conditions under which the amount of light transmitted is reduced when electricity is supplied to the standard transparent conducting layer and the non-opposing transparent conducting layer to align the particles.
FIG. 17 is a graph showing the relationship between particle concentration, applied voltage, and amplified light when the kinematic viscosity of the base oil as electrical insulated material is 10 cSt, in the embodiment of the present invention.
FIG. 18 is a graph showing the relationship between particle concentration, applied voltage, and amplified light when the kinematic viscosity of the base oil as electrical insulated material is 50 cSt, in the embodiment of the present invention.
FIG. 19 is a graph showing the relationship between particle concentration, applied voltage, and amplified light when the kinematic viscosity of the base oil as electrical insulated material is 100 cSt, in the embodiment of the present invention.
FIG.20 is a graph showing the relationship between particle concentration, applied voltage, and amplified light when the particle concentration is 5.0% by weight, in the embodiment of the present invention.
FIG. 21 is a drawing showing light transmission in the embodiment of the device when using inorganic/organic composite particles of a particle concentration of 7.5% by weight, with applied voltage and kinematic viscosity of the electrically insulating medium as parameters.

### DETAILED DESCRIPTION OF THE PREFERRED EMBODIMENTS

Embodiments of the present invention will now be explained with reference to the drawings.

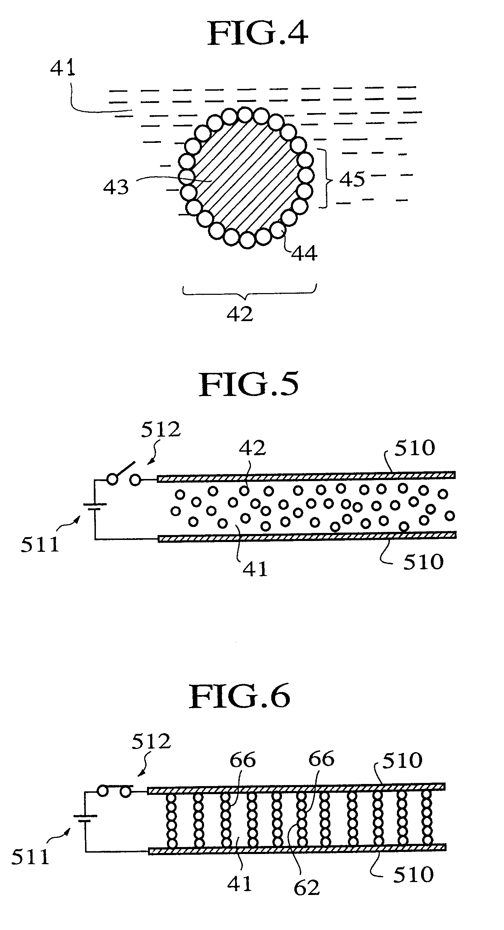

FIGs. 4-6 show a first embodiment of the electric alignment composition (EA composition) of the present invention.

In the EA composition, EA particles 42 are uniformly dispersed throughout an electrically insulating medium 41. The EA particles 42 each comprise a core member 43 comprising an organic polymeric compound and a surface layer (or a shell) 45 comprising particles 44 of an EA inorganic material, and form an inorganic/organic composite particle 42.

In this embodiment, the electrically insulating medium 41 is an colorless, transparent silicone oil. The high molecular organic compound from which the core member 43 of the inorganic/organic composite particle is formed is a polyacrylic ester. The EA inorganic material particles 44 which form the surface layer 45 are made from an inorganic ion exchange substance, a white titanium hydroxide, which is also an electro-semiconductor inorganic material. The inorganic/organic composite particles are white.

In addition, the ratio of the EA particles 42 contained in the electrically insulating medium 1 is 7.5% by weight. Generally, the color of the EA composition of the present invention is determined by combining the color of the electrically insulating medium used and the color of the EA particles dispersed therein. If the electrically insulating medium used is colorless and transparent, this medium assumes the same color as the EA particles. In the above-mentioned embodiment, the electrically insulating medium 1 is colorless and transparent, and because the EA particles 42, specifically the inorganic/organic composite particles 42, are white, this EA composition becomes white and opaque.

In the EA composition, as shown in FIG. 5, when observed from one electrode side interposed between a pair of transparent electrodes 510 positioned separated and in parallel, the electrode surface is opaque when the voltage is OFF, and becomes the same color as the EA composition.

In the electrodes 510, as shown in FIG. 6, when a voltage is applied from a power source 511 via a switch 512, chain members 66 are formed positioned in chain form at right angles to the surface of the electrodes 510 from the EA effect. At this time, each chain member 66 is oriented parallel to and mutually separated from the other chain members 66. When the EA particles 62 contained in the electrically insulating medium 41 forms the chain members 66 oriented in a mutually separated manner, light directed perpendicularly from one of the transparent electrodes 510 can be transmitted without being absorbed in the spaces between the chain members 66.

Accordingly, the surfaces of the electrodes are seen to be transparent. Specifically, the electrode surface can be changed to transparent from opaque including black and white, corresponding to the color of the EA particles. The amount of light transmission can be adjusted by turning the switch 512 ON or OFF.

Any conventionally-known EA fluid can be used as the electrically insulating medium 41 used in the EA composition of the present invention. For example, any fluid can be used if it has high electrically insulating properties and can withstand electrical insulation breakdown, is chemically stable, and if EA particles can be stably dispersed therein, such as, for example, diphenyl chloride, butyl sebacate, aromatic polycarbonate higher alcohol ester, halophenyl alkyl ether, transformer oils, paraffin chloride salts, fluorinated oils, or silicone or fluoro-silicone oils, or the like. Mixtures of these can also be used.

The electrically insulating medium 41 can be colored, depending on the objective. In the case of coloration, it is desirable that an oil soluble or a dispersible dye be used, fusible in a selected electrically insulating medium, of a type and weight where the electrical characteristics are not lost.

Other additives which may be included in the electrically insulating medium 41, include dispersing agents, surfactants, viscosity regulating agents, antioxidants, stabilizers, and the like. The kinematic viscosity of the electrically insulating medium 41 is preferably in the range from 1 cSt to 3000 cSt. If the kinematic viscosity is less than 1 cSt, the EA composition exhibits inadequate stability under storage; if greater than 3000 cSt, bubbles are formed and enfolded into the medium during adjustment. These bubbles are difficult to remove and are undesirable because of the obstacles in handling. From this viewpoint, a more desirable range of viscosity is 10 to 1000 cSt, and the most desirable range is 10 to 100 cSt.

Any such material can be used for the EA particles 42 used in the embodiment, if the solid particles exhibit the EA effect, including elements, organic compounds or inorganic compounds, or mixtures of these.

Examples which can be given include particles of inorganic ion exchange substances, oxides of metals, silica gel, electro-semiconductor inorganic materials, carbon black, and the like, and particles having these materials as a surface layer.

However, it is particularly desirable that the EA particles 42, as shown in the above-mentioned embodiment, be inorganic/organic composite particles comprising the core member 43 comprising an organic polymeric compound and the surface layer (or the shell) 45 comprising the inorganic compound 44 having an electric alignment.

In these inorganic/organic composite particles, the surface layer 45 of an EA inorganic compound with a comparatively high specific gravity is held on a high molecular organic compound with a comparatively low specific gravity, and the specific gravity of all the particles is regulated so that it is close to that of the electrically insulating medium.

Accordingly, the EA composition dispersed in the electrically insulating medium exhibits superior stability during storage.

Examples which can be given of a high molecular organic compound which can be used for the core member 43 of the inorganic/organic composite particles 42 include poly(metha)acrylic ester, copolymers of (metha)acrylic ester and styrene, polystyrene, polyethylene, polypropylene, nitryl rubber, butyl rubber, ABS resin, nylon, polyvinylbutylate, ionomers, copolymers of ethylene and vinyl acetate, vinyl acetate resin, one type or two or more types mixed or copolymerized of polycarbonate resin, and the like.

Preferred examples of the various materials which can be used as the EA inorganic material 44 forming the surface layer 45 are inorganic ion exchange substances, silica gel, and electro-semiconductor inorganic materials. When the surface layer 45 is formed on the core member 43 comprising an organic polymeric compound using such an EA inorganic material 44, the resulting inorganic/organic composite particles become useful EA particles 42.

Examples of an inorganic ion exchange substance which can be given include (1) hydroxides of multivalent metals, (2) types of hydrotalcites, (3) acid salts of multivalent metals, (4) hydroxyapatite, (5) nashicon-type compounds, (6) clay minerals, (7) types of potassium titanate, (8) heteropoly salts, and (9) insoluble ferrocyanides.

The various inorganic ion exchange substances used in the first embodiment shown in FIGs.4-6 of the present invention will now be explained in detail. The following description can be used for all embodiments of the present invention which will be described in detail later.

### (1) Hydroxides of multivalent metals

These materials can be designated by the general formula MOₓ(OH)_{y} (where M is a multivalent metal, x is a integer greater than "0", an y is a positive number).

Specific examples include titanium hydroxide, zirconium hydroxide, bismuth hydroxide, niobium hydroxide, molybdenum hydroxide, magnesium hydroxide, manganese hydroxide, iron hydroxide, and the like.

Here, for example, titanium hydroxide can include both titanium hydrate (other names are methatitanic acid or b-titanic acid, TiO(OH)₂) and titanium hydroxide (other names are orthotitanic acid or a-titanic acid, Ti(OH)₄).

This also applies to the other compounds.

### (2) Types of hydrotalcites

These compounds can be designated by the general formula M₁₃A₁₆(OH)₄₃(CO)₃.12H₂₀ (where M is a bivalent metal). Specific examples of the bivalent metal M include Mg, Ca, Ni, or the like.

### (3) Acid salts of multivalent metals

Examples of these include titanium phosphate, zirconium phosphate, tin phosphate, cerium phosphate, chromium phosphate, zirconium arsenate, titanium arsenate, tin arsenate, cerium arsenate, titanium antimonide, tin antimonide, niobium antimonide, zirconium antimonide, zirconium tungstate, titanium vanadate, zirconium molybdate, titanium selenide, tin molybdate, and the like.

### (4) Hydroxyapatites

Examples of these include potassium apatite, lead apatite, strontium apatite, cadmium apatite, and the like.

### (5) Nashicon-type compounds

Examples of these include compounds such as (H₃O)Zr₂(PO₄)₃, but nashicon-type compounds with Na substituted for the H₃O can also be used in the present invention.

### (6) Clay minerals

Examples which can be given include montmorillonite, sepiolite, bentonite, and the like, but sepiolite is particularly preferred.

### (7) Types of potassium titanate

These compounds can be designated by the general formula aK₂O.bTiO₂.nH₂O (where a is a positive number meeting the conditions 0 < a <= 1; b is a positive number meeting the conditions 1 <= b <= 6; and n is a positive number).

Examples which can be given include K₂ · TiO₂ · 2H₂O, K₂O · 2TiO₂ · 2H₂O, 0.5K₂O · TiO₂ · 2H₂O, and K₂O · 2.5TiO₂ · 2H₂O.

Also, among the above compounds, compounds wherein a or b is not an integer are subjected to an acid process with compounds wherein a or b is a suitable integer, and can be easily formed by substituting H for K.

### (8) Heteropoly salts

These compounds can be designated by the general formula H₃AE₁₂O₄0.nH₂₀ (where A is phosphorous, arsenic, germanium, or silicon; E is molybdenum, tungsten, or vanadium; and n is a positive number). Examples which can be given include ammonium molybdate and ammonium tungstophosphate.

### (9) Insoluble ferrocyanides

These are compounds designated by the following general formula. M_{b-pxa}A[E(CN)₆] (where M is an alkali metal or a hydrogen ion; A is zinc, copper, nickel, cobalt, manganese, cadmium; E is iron (II), iron (III), or cobalt (III), or the like; b is 4 or 3; a is the valency of A; and p is a positive number from 0 to b/a).

Specific examples of insoluble ferrocyanides include Cs₂Zn[Fe(CN)₆] and K₂Co[Fe(CN)₆] and the like.

All the above inorganic ion exchange substances (1) to (6) contain an OH group. Substances wherein one part or all of the ions existing on the ion exchange side of the inorganic ion exchange substances are substituted for another ion (hereinafter referred to as a substituted inorganic ion exchange substance) are also included in the inorganic ion exchange substances of the present invention.

Specifically, when the above-mentioned inorganic ion exchange substance is designated as R - M1 (where M1 indicates the type of ion on the ion exchange side), one part or all of M1 in R - M1 is a substituted inorganic ion exchange substance exchanged for an ion type M2 which is different from M1, in accordance with the following ion exchange reaction, or an inorganic ion exchange substance of the present invention.

xR - M¹ + yM² --> Rx - (M² )y + xM¹

(where x and y indicate the valences of the ion type M² and the ion type M¹ respectively) M¹ is different from the type of inorganic ion exchange substance with an OH group, but, with an inorganic ion exchange substance exhibiting cation exchange characteristics, normally M¹ is H⁺, and M² in this case is a substance wherein a metal ion without H⁺ such as an alkali metal, an alkaline earth metal, a multivalent metal, a transition metal, or a rare earth metal, or the like, is optional.

With an inorganic ion exchange substance exhibiting cation exchange characteristics, M¹ is normally OH⁻. In this case M² is optionally, for example, any anion other than OH⁻ such as I, CI, SCN, NO₂, Br, F CH₃COO, SO₄, or CrO₄ or the like, or a mixture of ions or the like.

If, in an inorganic ion exchange substance the OH group can be temporarily removed as the result of a high temperature heat treatment and the OH group can be replaced as the result of an operation such as soaking in water or the like, this inorganic ion exchange substance which has been subjected to a high temperature heat treatment can be used in the present invention.

Specific examples which can be given include HZr₂(PO₄)₃ obtained by heating a nashicon-type compound, such as, for example, (H₃O)Zr₂(PO₄)₃, or hydrotalcites which has been subjected to a high temperature heat treatment (heat-treated to 500 to 700°C) and the like.

These inorganic ion exchange substances can not only used singly as a surface layer but several types can be used at the same time. It is particularly desirable to use hydroxides of multivalent metals and acid salts of multivalent metals as the inorganic ion exchange substances.

Other desirable EA inorganic materials which can be used as the surface layer 833 of the inorganic/organic composite particles 730 are metal oxides wherein the electrical conductivity is 10³ to 10⁻¹¹ Ω⁻¹/cm at room temperature, metal hydroxides, hydroxides of metal oxides, inorganic ion exchange substances, or such materials subjected to doping with at least one type of metal, or where the existence of metal doping is immaterial, and materials wherein at least one type of the above is provided as an electro-semiconductive layer on another support member.

These other desirable EA inorganic materials or electro-semiconductive inorganic materials will now be described in further detail.
(A) Metal oxides:
   These are, for example, SnO₂, amorphous titanium dioxide (manufactured by Idemitsu Petrochemical Co.)
(B) Metal hydroxides: these are, for example, titanium hydroxide, niobium hydroxide, and the like.
   Examples of titanium hydroxide which can be given here include hydrated titanium (manufactured by Ishihara Sangyo Kaisha Ltd.), methatitanic acid (also called b-titanic acid and TiO(OH)₂), and orthotitanic acid (also called a-titanic acid and Ti(OH)₄).
(C) Hydroxides of metal oxides: examples which can be given include FeO(OH) gacite and the like.
(D) Hydroxides of multivalent metals: the same as described under (1) above.
(E) Types of hydrotalcites: the same as described under (2) above.
(F) Acid salts of multivalent metals: the same as described under (3) above.
(G) Hydroxyapatites: the same as described under (4) above.
(H) Nashicon-type compounds: the same as described under (5) above.
(I) Clay minerals: the same as described under (6) above.
(J) Types of potassium titanate: the same as described under (7) above.
(K) Heteropoly salts: the same as described under (8) above.
(L) Insoluble ferrocyanides: the same as described under (9) above.
(M) Metal-doped EA inorganic materials: these are EA inorganic materials doped with a metal such as antimony (Sb) or the like in order to increase the electric conductance of the above EA inorganic materials (A) to (L).
   Examples which can be given include tin oxide (SnO₂) doped with antimony (Sb).
(N) Materials wherein an EA inorganic material is provided as an electro-semiconductive layer on another support member: for example, inorganic particles of titanium oxide, silica, alumina, silica-alumina, or the like, or high molecular inorganic particles such as polyethylene, polypropylene, or the like, are used as the support medium. Tin oxide (SnO₂) doped with antimony (Sb) can be provided as an electro-semiconductive layer on these inorganic particles.

The entire particle provided with an EA inorganic material in this manner becomes an EA inorganic material.

These EA inorganic materials are not only used singly, but several types can be used at the same time as a surface layer.

There are various methods for manufacturing this type of inorganic/organic composite particles 42. For example, there is a method whereby a particle-shaped core member 43, as shown in FIG.4, made from an organic polymeric compound and a particle-shaped EA inorganic material 44 are conveyed by an air jet and impacted. In this case minute particles of the EA inorganic material are impacted at high speed onto the surface of the particle-shaped core member 43 and these minute particles adhere to form a surface layer 45.

Also, an example of another manufacturing method is the method whereby the particle-shaped core member 43 is suspended within a gaseous body, and a solution of the EA inorganic material is sprayed and atomized on the surface of the core member 43. In this case the surface layer 45 is formed when the solution is caused to adhere to the surface of the core member 43 and then dried.

However, the most preferred method of producing the inorganic/organic composite particles 42 is a method whereby the surface layer 45 is formed simultaneously with the core member 43.

This method is carried out for example, by polymerizing a monomer of the high molecular organic compound from which the core member 43 is formed by emulsion polymerization, suspension polymerization, or dispersion polymerization in a polymerization medium, with the EA inorganic material 44 present in the monomer or in the polymerization medium in the form of minute particles. Water is desirable as the polymerization medium, but a mixture of water and a water soluble organic medium can be used. A weak organic solvent can also be used. In this method the monomer is polymerized in the polymerization medium and the core member particles are formed at the same time. The EA inorganic material 44 in the form of minute particles is aligned in layers to cover the surface of the core member 43 and the surface layer 45 is formed.

In the case where the inorganic/organic composite particles are manufactured by emulsion polymerization or suspension polymerization, the greatest portion of the minute particles of the EA inorganic material can be aligned on the surfaces of the core member particles by combining the hydrophobic characteristics of the monomer and the hydrophilic characteristics of the EA inorganic material.

In the method whereby the core member 43 and the surface layer 45 are formed simultaneously, the EA inorganic material 44 is minutely and solidly attached to the surface of the core member particles 43 comprising the organic polymeric compound, and solid inorganic/organic composite particles are formed.

The inorganic/organic composite particles 42 need not necessarily have a globular shape. However, in the case where the particles 42 are manufactured by the emulsion/suspension polymerization method whereby the particle shape of the core member 43 is regulated, the shape of the resulting inorganic/organic composite particles 42 is almost globular.

Furthermore, if the shape is globular, it is possible to scatter the light in all directions when the amount of light transmission is regulated so that the globular shape is more advantageous than an irregular shape. There are no particular limitations as to the particle diameter of the inorganic/organic composite particles but the preferable range is 0.1 to 500 µ m, and more preferably about 5 to 200 µ m.

There are no particular limitations as to the particle diameter of the minute particles of the EA inorganic material 44 at this time but the preferable range is 0.005 to 100 µ m, and more preferably 0.01 to 10 µ m.

In this type of inorganic/organic composite particles 42, there are no particular limitations as to the ratio of the weight of the EA inorganic material 44 which forms the surface layer 45 to the weight of the high molecular organic compound which forms the core member 43, but the preferable range of (EA inorganic material): (high molecular organic compound) is in the range of (1 to 60): (99 to 40), and, more preferably, in the range of (4 to 30): (96 to 70). Here, the EA effect of the resulting EA fluid compound is inadequate if the weight ratio of the EA inorganic material 44 is less than 1%; if this weight ratio exceeds 60% an excess current will flow.

The surface layer 45 or the core member 43 of the inorganic/organic composite particles may also contain a colorant. A pigment can be used as the colorant in the surface layer 45. This pigment is preferably contained in the surface layer 45 used mixed with the EA inorganic material 44 when the surface layer 45 made from the EA inorganic material 44 is formed on the core member 43 by the method described above.

In the case where the core member 43 contains the colorant, either a dye or a pigment generally known to be used for synthetic resins can be utilized. This colorant can be mixed in advance into the monomer which forms the surface layer 43 after which the monomer is polymerized, or it can be included in the core member by being kneaded into the synthetic resin used to form the core member 43.

By using the inorganic/organic composite particles 42 containing colorant in the surface layer 45 or in the core member 43 or in both, the scattered light from the resulting EA composition can be colored with an optional color when the electric field is not charged.

In the inorganic/organic composite particles 42 manufactured by these various processes, in particular, in the process whereby the core member 43 and the surface layer 45 are formed simultaneously, generally, all or part of the surface layer 45 is covered with a thin film of high molecular organic material or another additive material such as a dispersing agent or emulsifying agent used in the manufacturing process, and an adequate EA effect is demonstrated in the EA inorganic minute particles. This thin film of inactive material can be easily removed from the particle surface by polishing.

Accordingly, in the Electro-optical Fluid composition used in the present invention, inorganic/organic composite particles of which the surfaces have been polished are used.

However, in the case where the inorganic/organic composite particles 42 are produced by forming the surface layer 45 after the core member 43 has been formed, the surface of the surface layer 45 is not an inactive material, and the EA effect of the inorganic ion exchange substance is sufficiently large.

The surface of these particles can be polished by various methods.

For example, the inorganic/organic composite particles 42 can be dispersed throughout a dispersion medium such as water or the like by agitation. This process is carried out by a method whereby a polishing material such as sand particles or balls is mixed into the dispersion medium and agitated together with the inorganic/organic composite particles 42, or by a method of agitation using a polishing grindstone.

Also, for example, both the inorganic/organic composite particles 42 and the above-mentioned type of polishing material can be agitated by a dry method using a grindstone without using a dispersion medium.

An even more desirable polishing method is a method whereby the inorganic/organic composite particles are agitated by an air jet. In this method the polishing occurs from vigorous mutual impacting of the particles in the gaseous phase.

This is a very desirable method inasmuch as it is unnecessary to use another polishing material, and the inactive material which is peeled away from the surface of the particles can easily be separated by classification.

It is required to specify the polishing conditions because of the variety of devices, speed of agitation, and quality of inorganic/organic composite particles used in this air jet agitation, but generally an air jet agitation of about 0.5 to 15 minutes at an agitation speed of 6000 rpm is desirable.

The EA composition of the present invention can be fabricated by dispersing the EA particles 42 and other components such as a dispersing agent, if necessary, together in the electrically insulating medium 41 by uniformly mixing with agitation. For this agitation, any piece of equipment normally used to disperse solid particles in a liquid dispersing medium can be used.

There is no particular limitation on the concentration of the particles of the EA particles 42 throughout the electrically insulating medium 41, in the case of use for control of light transmission, but this concentration is preferably in the range of 0.5 to 15% by weight. If less than 0.5 % by weight the density of the particles is too small so that when the electric field is not imposed there is the impression of transparency, and when the electric field is imposed the contrast is inadequate; if greater than 15 % by weight the particle density is too great and when the electric field is imposed, even when the orientation of the EA particles is controlled, there is concern that a sufficient impression of transparency is not obtained. From this viewpoint the concentration of the EA particles 42 in the electrically insulating medium 41 is more preferably in the range from 2.5 wt% to 10 wt%.

The electric field applied to the EA composition is preferably greater than 0.1 kV/mm. A field in the range of 0.25 kV/mm to 1.5 kV/mm is particularly desirable. By turning this field ON or OFF, the contrast of the light transmission in the direction of the electric field imposed on the EA composition of the present invention can be changed.

Next, a second embodiment of the present invention will be described.

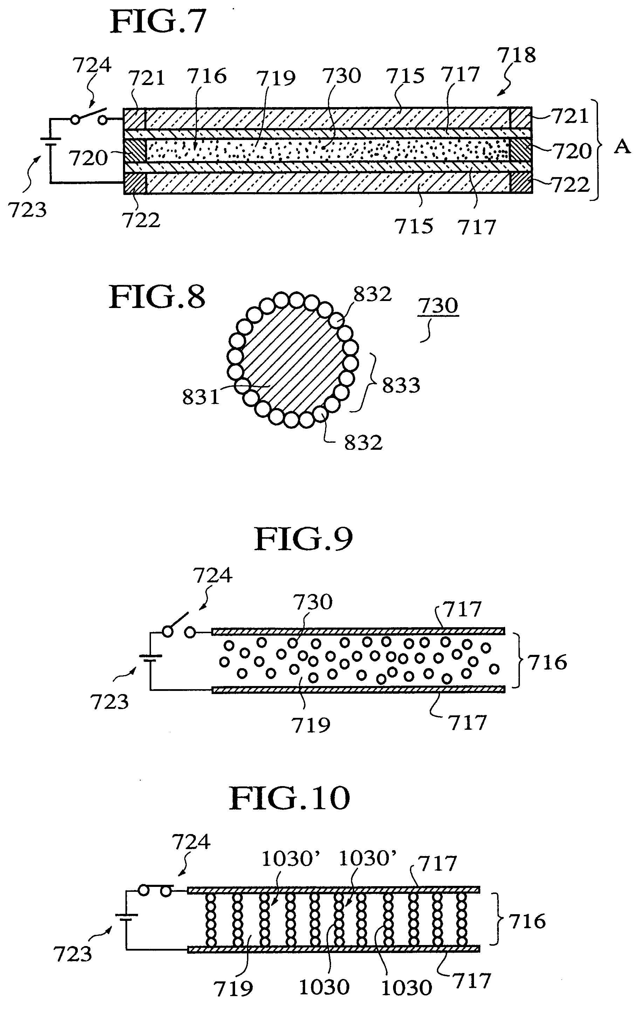

FIGs.7-10 illustrates a device A for controlling the amount of light transmission as the second embodiment relating to the present invention.

In the device A of this embodiment for controlling the amount of light transmission, a pair of transparent substrates 715 is aligned so that the substrates 715 are in parallel at a specified spacing, and an Electro-optical Fluid composition 716 in the liquid state is enclosed in the space between the substrates. A transparent conductive layer 717 covers all the inner surfaces relatively opposing the transparent substrates 715, and a sealing member 720 is installed on the outer peripheral edges of the transparent substrates 715. The Electro-optical Fluid composition 716 is enclosed in a plate-shaped hollow transparent storage member 718 formed from the transparent substrates 715 and the sealing member 720.

In addition, electrodes 721, 722 electrically joined to the transparent conductive layer7 17 are formed on the outer peripheral edge of the transparent substrates 715. Each of the electrodes 721 and 722 is connected to a power source 723 through a switch 724.

Because the transparent substrates 715 must be able to store the Electro-optical Fluid composition 716 and must have the strength to withstand transportation and installation, it is desirable for the substrates to be formed from various types of glass or from a transparent resin such as acrylic resin. The entire substrate 715 does not have to be transparent. The substrate 715 may be formed with only the portion which transmits light being transparent. Accordingly, the substrate can be fabricated from a metal frame or a plastic frame with only the peripheral edge section not being transparent. A structure whereby a transparent glass substrate or plastic substrate is inserted into the inner part of this frame is acceptable. In addition, this structure is not limited to a plate form.

Various types of cubic structures such as a cube, a rectangular parallelopiped, a container shape, a box shape or the like have been considered.

In the Electro-optical Fluid composition 716, inorganic/organic composite particles 730, the structure of which is shown in FIG.8, are basically dispersed throughout an electrically insulating medium 719. These particles are formed from a core member 831, made from a high molecular organic compound, and a surface layer 833 fabricated from an inorganic material 832 (hereinafter referred to as an EA inorganic material) which provides an electric alignment and covers the surface of the core member 831.

Various materials are commonly known as this type of EA inorganic material 832. Examples of preferred materials which can be given include inorganic ion exchange substances made from hydroxides of multivalent metals, types of hydrotalcites, acid salts of multivalent metals, hydroxyapatite, nashicon-type compounds, clay minerals, types of potassium titanate, heteropoly salts, or insoluble ferrocyanides, and silica gel, as well as electro-semiconductive inorganic materials. When this type of EA inorganic material 832 is formed into a surface layer 833 on the core member 831 shown in FIG.8 comprising an organic polymeric compound, the EA effect occurs on the Electro-optical Fluid composition 716 shown in FIG.7.

In addition, it is preferred that the inorganic/organic composite particles 730 be produced by a method whereby the surface layer 833 is formed simultaneously with the core member 831. Examples which can be given of a high molecular organic compound which can be used for the core member 831 of the inorganic/organic composite particles 730 include poly(metha)acrylic ester, copolymers of (metha)acrylic ester and styrene, polystyrene, polyethylene, polypropylene, nitryl rubber, ABS resin, nylon, polyvinylbutylate, ionomers, copolymers of ethylene and vinyl acetate, vinyl acetate resin, one type or two or more types mixed, or copolymers of polycarbonate resin, and the like.

Examples of an EA inorganic material 832 suitable for use as the surface layer 833 of the inorganic/organic composite particles 730 include an inorganic ion exchange substance, an electro-semiconductive inorganic material, or silica gel.

Materials of this type exhibit a superior electric alignment when the solid particles are dispersed throughout the electric insulating medium.

Examples of an inorganic ion exchange substance which can be given include (1) hydroxides of multivalent metals, (2) types of hydrotalcites, (3) acid salts of multivalent metals, (4) hydroxyapatite, (5) nashicon-type compounds, (6) clay minerals, (7) types of potassium titanate, (8) heteropoly salts, and (9) insoluble ferrocyanides.

The various inorganic ion exchange substances which can be used for the second embodiment shown in FIGs.7-10 of the present invention is as same as that of the first embodiment shown in FIGs.4-6. Therefore explanations of the various inorganic ion exchange substances are omitted here.

In addition, other desirable EA inorganic materials which can be used as the surface layer 833 of the inorganic/organic composite particles 730 are metal oxides wherein the electrical conductivity is 10³ to 10⁻¹¹ Ω⁻¹/cm at room temperature, metal hydroxides, hydroxides of metal oxides, inorganic ion exchange substances, or such materials subjected to doping with at least one type of metal, or where the existence of metal doping is immaterial, and materials wherein at least one type of the above is provided as an electro-semiconductive layer on another support member.

These other desirable EA inorganic materials for the second embodiment shown in FIGs.7-10 are same as that of the first embodiment shown in FIGs.4-6. Therefore the explanation of the other desirable EA inorganic materials are omitted.

As the electrically insulating medium 719 used in the above-mentioned Electro-optical Fluid composition 730, all materials commonly known to be used in an EA fluid can be utilized. For example, any fluid can be used if it has electrically insulating properties and can withstand electrically insulating breakdown, is chemically stable, and if inorganic and organic composite particles can be stably dispersed in it, such as, for example, diphenyl chloride, butyl sebacate, aromatic polycarbonate higher alcohol ester, halophenyl alkyl ether, transformer oils, paraffin chloride salts, fluorinated oils, or silicone, or fluoro-silicone oils, or the like. Mixtures of these can also be used.

There are various methods for manufacturing this type of inorganic/organic composite particles 730. For example, there is a method whereby a particle-shaped core member 831, as shown in FIG.8, made from a high molecular organic compound and a particle-shaped EA inorganic material 832 are conveyed by an air jet and impacted. In this case minute particles of the EA inorganic material are impacted at high speed onto the surface of the particle-shaped core member 831 and these minute particles adhere to form a surface layer 833.

Also, an example of another manufacturing method is the method whereby the particle-shaped core member 831 is suspended within a gaseous body, and a solution of the EA inorganic material is sprayed and atomized on the surface of the core member 831. In this case the surface layer 833 is formed when the solution is caused to adhere to the surface of the member 831 and then dried.

However, the most preferred method of producing the inorganic/organic composite particles 833 is a method whereby the surface layer 833 is formed simultaneously with the core member 831.

This method is carried out for example, by polymerizing a monomer of the high molecular organic compound from which the core member 831 is formed by emulsion polymerization, suspension polymerization, or dispersion polymerization in a polymerization medium, with the EA inorganic material 832 present in the monomer or in the polymerization medium in the form of minute particles. Water is desirable as the polymerization medium, but a mixture of water and a water soluble organic medium can be used. A weak organic solvent can also be used. In this method the monomer is polymerized in the polymerization medium and the core member particles are formed at the same time. The EA inorganic material 832 in the form of minute particles is aligned in layers to cover the surface of the core member 831 and the surface layer 833 is formed.

In the case where the inorganic/organic composite particles are manufactured by emulsion polymerization or suspension polymerization, the greatest portion of the minute particles of the EA inorganic material can be aligned on the surfaces of the core member particles by combining the hydrophobic characteristics of the monomer and the hydrophilic characteristics of the EA inorganic material.

In the method whereby the core member 831 and the surface layer 833 are formed simultaneously, the EA inorganic material 832 is minutely and solidly attached to the surface of the core member particles 831 formed from the high molecular organic compound, and solid i organic/organic composite particles are formed.

The inorganic/organic composite particles 833 need not necessarily have a globular shape. However, in the case where the particles 833 are manufactured by the emulsion/suspension polymerization method whereby the particle shape of the core member 831 is regulated, the shape of the resulting inorganic/organic composite particles 42 is almost globular.

Furthermore, if the shape is globular, it is possible to scatter the light in all directions when the amount of light transmission is regulated so that the globular shape is more advantageous than an irregular shape. There are no particular limitations as to the particle diameter of the inorganic/organic composite particles but the preferable range is 0.1 to 500 µ m, and more preferably about 5 to 200 µ m.

There are no particular limitations as to the particle diameter of the minute particles of the EA inorganic material 832 at this time but the preferable range is 0.005 to 100 µ m, and more preferably 0.01 to 10 µ m.

In this type of inorganic/organic composite particles 833, there are no particular limitations as to the ratio of the weight of the EA inorganic material 832 which forms the surface layer 833 to the weight of the high molecular organic compound which forms the core member 831, but the preferable range of (EA inorganic material): (high molecular organic compound) is in the range of(1 to 60): (99 to 40), and, more preferably, in the range of (4 to 30): (96 to 70). Here, the EA effect of the resulting EA fluid compound is inadequate if the weight ratio of the EA inorganic material 832 is less than 1%; if this weight ratio exceeds 60% an excess current will flow.

In the inorganic/organic composite particles 730 manufactured by these various processes, in particular, in the process whereby the core member 831 and the surface layer 833 are formed simultaneously, generally, all or part of the surface layer 833 is covered with a thin film of high molecular organic material or another additive material such as a dispersing agent or emulsifying agent used in the manufacturing process, and an adequate EA effect is demonstrated in the EA inorganic minute particles. This thin film of inactive material can be easily removed from the particle surface by polishing.

Accordingly, in the Electro-optical Fluid composition used in the present invention, inorganic/organic composite particles of which the surfaces have been polished are used.

However, in the case where the inorganic/organic composite particles 833 are produced by forming the surface layer 833 after the core member 831 has been formed, the surface of the surface layer 833 is not an inactive material, and the EA effect of the inorganic ion exchange substance is sufficiently large.

The surface of these particles can be polished by various methods.

For example, the inorganic/organic composite particles 730 can be dispersed throughout a dispersion medium such as water or the like by agitation. This process is carried out by a method whereby a polishing material such as sand particles or balls is mixed into the dispersion medium and agitated together with the inorganic/organic composite particles 730, or by a method of agitation using a polishing grindstone.

Also, for example, both the inorganic/organic composite particles 730 and the above-mentioned type of polishing material can be agitated by a dry method using a grindstone without using a dispersion medium.

An even more desirable polishing method is a method whereby the inorganic/organic composite particles are agitated by an air jet. In this method the polishing occurs from vigorous mutual impacting of the particles in the gaseous phase.

This is a very desirable method inasmuch as it is unnecessary to use another polishing material, and the inactive material which is peeled away from the surface of the particles can easily be separated by classification.

It is required to specify the polishing conditions because of the variety of devices, speed of agitation, and quality of inorganic/organic composite particles used in this air jet agitation, but generally an air jet agitation of about 0.5 to 15 minutes at an agitation speed of 6000 rpm is desirable.

In the Electro-optical Fluid composition used in the present invention, it is possible to produce the above-mentioned inorganic/organic composite particles by uniformly blending any necessary dispersing agents and the like into the electrically insulating medium with other components, using agitation. The agitator used can be any usual type for dispersing solid particles into a liquid dispersing medium.

Next, the effective concentration of the inorganic/organic composite particles, the kinematic viscosity of the electrically insulating medium and the applied voltage when controlling the amount of light transmission relating to the present invention will be explained.

There is no particular limitation on the concentration of the particles of the inorganic/organic composite particles 730 throughout the Electro-optical Fluid composition 716 used in the present invention but this concentration is preferably 0.5 to 15% by weight. If the concentration of the particles is less than 0.5 % by weight an adequate light transmission control effect is not obtained; if greater than 15 % by weight the particle concentration is too great and a large quantity of the inorganic/organic composite particles 730 becomes dispersed in the Electro-optical Fluid composition 716 so that even when a later-explained electrical field is impressed and the orientation of the inorganic/organic composite particles 730 is controlled there is concern that transmission sensitivity is not obtained.

It is desirable that the kinematic viscosity of the electrically insulating medium 19 be in the range of 1 to 3000 cSt. If the kinematic viscosity is less than 1 cSt, large quantities of volatile components are found to exist throughout the dispersion medium, and the stability of the electric alignment of optically-functional fluid during storage is inadequate. If the kinematic viscosity is greater than 3000 cSt, bubbles are formed and enfolded into the dispersion medium during adjustment. These formed bubbles are difficult to remove, and are not desirable because of the obstacle to handling. A more desirable range of viscosity is 10 to 1000 cSt, and the most desirable range is 10 to 100 cSt. An optional range of 0.1 to 5.0 kV/mm is possible for an electric field imposed on the Electro-optical Fluid composition 716, but an electric field greater than this range may also be imposed. This electric field is preferably in the range of 0.25 to 1.5 kV/mm.

Next, control of the amount of light transmitted using the device shown in FIG. 8 will be explained.

FIG. 9 shows the state when electricity is not passing through the transparent conductive layers 717 with the electric switch 724 opened. In this state an electric field is not imposed on the inorganic/organic composite particles 730, therefore they are randomly suspended throughout the electrically insulating medium 719. When light is directed into the storage member 718 the presence of the inorganic/organic composite particles 730 causes the light to be scattered in various directions, so that the storage member 719 takes on a non-transmitting color tone and becomes cloudy, according to the color of the inorganic particles.

Accordingly, when a titanium oxide type material is used as the EA inorganic material 832, a slightly opaque color tone is obtained. If the inorganic/ organic composite particles 730 are globular in shape the light scatters in all directions, therefore there is little concern about the light being focused in a specific direction.

Next, if electricity is passed through the transparent conductive layers 717 with the switch 724 closed, as shown in FIG. 10, a large number of the inorganic/organic composite particles 1030 are combined in a chain form between the transparent conductive layers 717 at right angles to each transparent conductive layer 717. It is possible for each of the chain combination members 1030' to be aligned in parallel, separated from one another, simultaneous with their formation.

Specifically, the percentage of the inorganic/organic composite particles 1030 dispersed throughout the electrically insulating medium 719 is an amount less than the previously-mentioned approximately 10% by weight, so the total is small. Therefore, when the particles 1030 are positioned to form the chain combination members 1030', a spacing rather wider than the diameter of the inorganic/organic composite particles 1030 is opened between like chain combination members 1030'. As a result, light which is directed in the direction of the thickness of the storage member 718 passes through the storage member 718 without being completely damped.

Accordingly, it is possible to cause the storage member 718 to become transparent.

It is possible to change the storage member 718 from an opaque state to a transparent state by this operation, depending on whether or not electricity is supplied to the transparent conductive layers 717.

As a result the amount of light transmission can be regulated.

Accordingly, if, for example, a light transmission control device A of the above-mentioned configuration is used in the construction of a window glass, it becomes possible to easily switch from an cloudy state to a transparent state by switching a power supply ON or OFF so that the amount of light transmission via the window glass can be controlled.

Furthermore, it is possible to drive the light transmission control device A at an extremely small voltage of 0.1 to 5.0 kV/mm. Electric power of about 10 W/m² is therefore sufficient to drive the device and a considerable saving in power is provided.

In addition, the inorganic/organic composite particles 730 of the second embodiment can be completely aligned 10 to 20 seconds after applying electricity to the transparent conductive layers 717, therefore the response characteristics are adequate. Also, if light transmission is controlled using the Electro-optical Fluid composition 716, it is possible to control the amount of light transmission uniformly at all wave lengths without absorbing light of a specified frequency.

It is therefore possible to control the amount of light transmitted without wasting energy and with no concern about the generation of heat caused by light absorption. Also, when an electric field is once applied and the inorganic/organic composite particles 730 ... are oriented, this state is maintained even when the voltage on the inorganic/organic composite particles 730 ... is cut for a short period. The electric field may therefore be applied intermittently, thus saving energy. Also, the period for maintaining the state of orientation of the inorganic/organic composite particles 730 with no electric field depends on the kinematic viscosity of the electrically insulating medium 719 in which the inorganic/organic composite particles 1030 are dispersed, making suitable control possible. Specifically, the maintenance time can be shortened by reducing the kinematic viscosity of the electrically insulating medium 719.

Conversely, the maintenance time can be lengthened by increasing the kinematic viscosity of the electrically insulating medium 719. The light transmission control device A may comprise the transparent substrate 715, the transparent conductive layer 717, the sealing member 720, and the Electro-optical Fluid composition 716. The structure can therefore be simple, providing a manufactured unit cost considerably lower than that of a conventional device using liquid crystals. Incidentally, the unit cost of this previously explained Electro-optical Fluid composition is about 1/1000 of that of a normal liquid crystal material, which is extremely inexpensive.

In addition, various control circuits and LSIs are required to drive the liquid crystals in a device which uses liquid crystals, but in the light transmission control device A of the present invention a simple configuration is acceptable, as previously explained, and the electric circuits and the like associated with the power supply can be replaced with the minimum one switch only.

In fabricating the light transmission control device, two sheets of ITO (iridium tin oxide) glass 1.0 mm thick, covered with a transparent conductive layer made from an ITO film are provided extending over the total glass surface. The two glass sheets oppose the respective like transparent conductive layers in parallel at a spacing of 2 mm, and the peripheral edge sections are sealed with sealing members made from plastic.

Next, an inlet hole is formed in one part of the sealing member and a liquid Electro-optical Fluid composition is poured through the hole. After pouring, the inlet hole is closed, to provide the light transmission control device shown in FIG.7.

The manufacturing process for the Electro-optical Fluid composition used in the present invention will now be explained.

First, a mixture of titanium hydroxide (normal name: hydrated titanium, manufactured by Ishihara Sangyo Kaisha Ltd., C-II), butyl acrylate, 3-butylene-glycol-dimethacrylate, and a polymerization initiator was dispersed in water containing potassium triphosphate as a dispersion stabilizer, and subjected to suspension polymerization under agitation for one hour at 60°C. The resulting product was filtered, acid-washed, washed with water, and then dried to provide the inorganic/organic composite particles. The inorganic/organic composite particles obtained in this manner were agitated in an air jet using an air jet agitator (Hybridizer manufactured by Nara Machinery Manufacturing Co., Ltd.), to obtain surface-polished inorganic/organic composite particles.

These inorganic/organic composite particles were uniformly dispersed in silicone oils of various viscosities (TSF451 series, manufactured by Toshiba Silicon Co., Ltd.) to give various content ratios by %wt. Electro-optical Fluid composition fluid compositions were obtained as an electrically insulating medium of various particle concentrations in silicone oils of a uniform concentration and silicone oils of various viscosities with uniform particle concentrations.

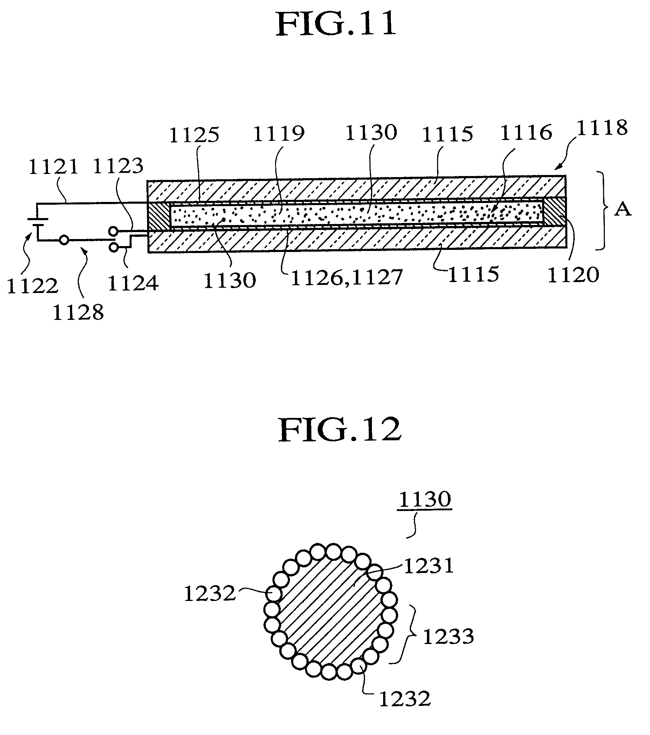

A third embodiment of the present invention will now be explained in detail with reference to specific examples. FIGS. 11-16 illustrate the third embodiment of a device A for controlling the amount of light transmission relating to the present invention.

In the device A shown in FIG.11 of this embodiment for controlling the amount of light transmission, a pair of transparent substrates 1115 is aligned so that the substrates 1115 are in parallel at a specified spacing, and an Electro-optical Fluid composition 1119 in the liquid state is enclosed in the space between the substrates. A transparent conductive layer 1125 covers all the inner surfaces relatively opposing the transparent substrates 1115, and a sealing member 1120 is installed on the outer peripheral edges of the transparent substrates 1115. The Electro-optical Fluid composition 1130 is enclosed in a plate-shaped hollow transparent storage member 1118 formed from the transparent substrates 1115 and the sealing member 1120.

In addition, electrodes 1123 electrically joined to the transparent conductive layer 1126(1127) are formed on the outer peripheral edge of the transparent substrates 1115. Each of the electrodes 1121 and 1123 is connected to a power source 1122 through a switch 1128.

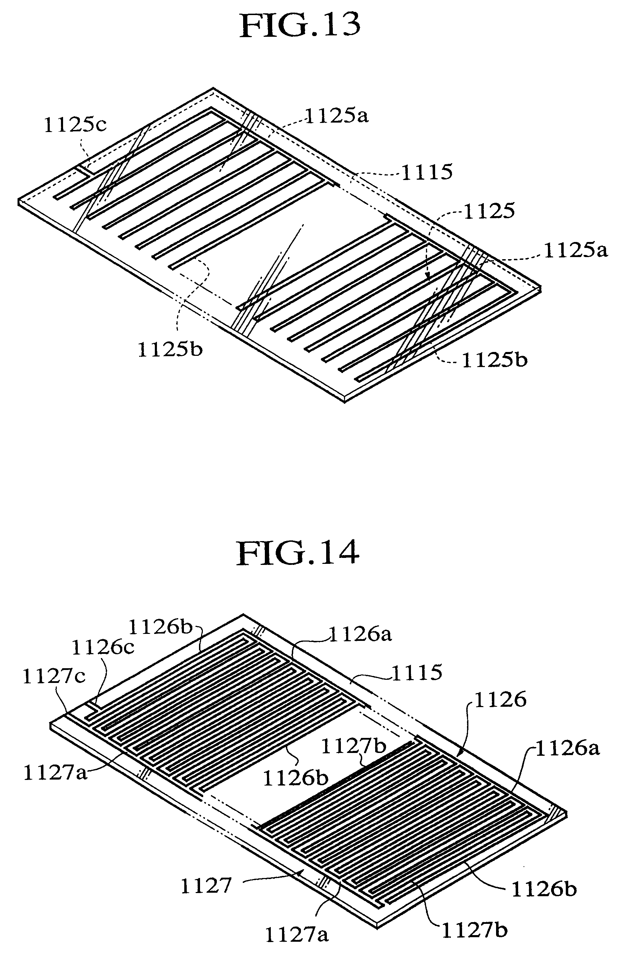

Further, as shown in FIG.13 and FIG.14, a comb-blade-like standard transparent conductive layer 1125 is formed on the lower surface of the upper transparent substrate 1115, and a comb-blade-like opposing transparent conductive layer 1126 of the same shape and size as the standard transparent conductive layer 1125 is formed on the upper surface of the lower transparent substrate 1115. As shown in FIG.11, in the case where the transparent substrates 1115 are combined and affixed together in parallel, in upper and lower positions, the standard transparent conductive layer 1125 and the opposing transparent conductive layer 1126 are formed on each of the transparent substrates 1115, positioned completely in parallel. Also, a comb-blade-like non-opposing transparent conductive layer 1127 of the same shape and size as the opposing transparent conductive layer 1126, formed on the upper surface of the lower transparent substrate 1115, is formed to engage the comb-blade-like opposing transparent conductive layer 1126 without being connected.

Accordingly, the non-opposing transparent conductive layer 1127 of the lower transparent substrate 1115 is fabricated to face the standard transparent conductive layer 1125 of the upper transparent substrate 1115.

Also, the standard transparent conductive layer 1125 is structured from a straight-line base line 1125a, positioned so that it follows the long side section of one side of the upper transparent substrate 1115 and multiple branch-line sections 1125b are connected at right angles to the base line 1125a. In addition, the opposing transparent conductive layer 1126 is also made up of a base line 1126a and branch-line sections 1126b. In the same manner.

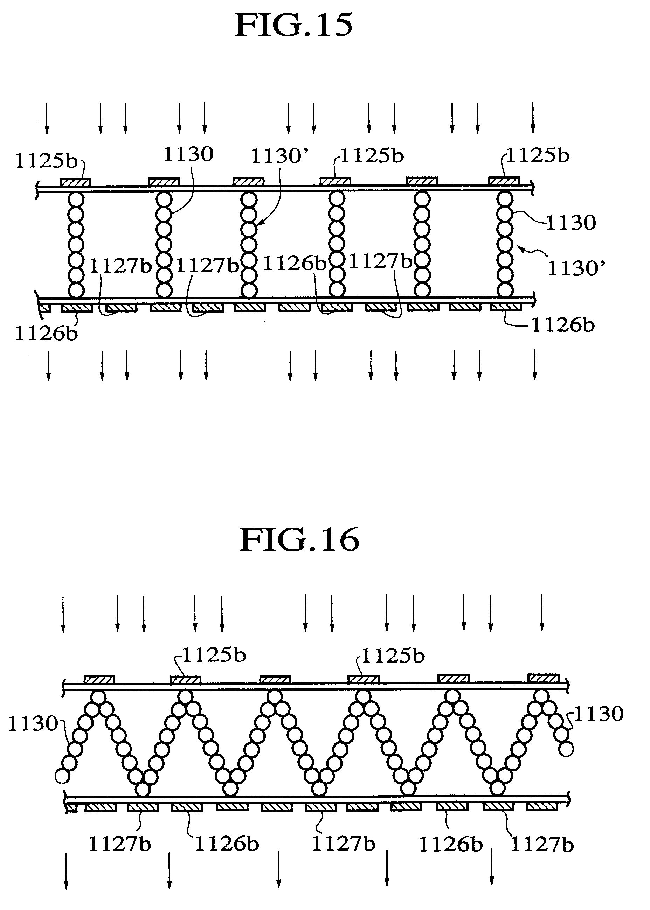

The non-opposing transparent conductive layer 1127 is also made up of a base line 1127a and branch-line sections 1127b .. in the same manner. Accordingly, when the upper and lower transparent substrates 1115 are affixedly combined in parallel, the branch-line sections 1125b .. of the standard transparent conductive layer 1125 together with the branch-line sections 1126b .. of the opposed transparent conductive layer 1126 are lined up above and below at the same pitch, as shown in FIG.15 and FIG.16, and the branch-line sections 1125b .. of the standard transparent conductive layer 1125 together with the branch-line sections 1127b .. of the non-opposing transparent conductive layer 1127 are positioned alternately at different pitches.

Next, a first draw-out line 1125c is formed in the corner of the upper transparent substrate 1115, connected to the standard transparent conductive layer 1125. A second draw-out line 1126c connected to the opposed transparent conductive layer 1126. A third draw-out line 1127c connected to the non-opposing transparent conductive layer 1127 are formed in the corner of the lower transparent substrate 1115.

Then, the first draw-out line 1125c, as shown in FIG.11, is connected to the power source 1122 through a first wire 1121, and the second draw-out line 1126c is connected to a second wire 1123, and the third draw-out line 1127c is connected to a third wire 1124 and the second wire 1123 and the third wire 1124 are connected to the power source 1122 through the switch 1128.

Because the transparent substrates 1115 must be able to store the Electro-optical Fluid composition 1116 and must have the strength to withstand transportation and installation, it is desirable for the substrates to be formed from various types of glass or from a transparent resin such as acrylic resin. The entire substrate 1115 does not have to be transparent. The substrate 1115 may be formed with only the portion which transmits light being transparent. Accordingly, the substrate can be fabricated from a metal flame or a plastic flame with only the peripheral edge section not being transparent. A structure whereby a transparent glass substrate or plastic substrate is inserted into the inner part of this flame is acceptable. In addition, this structure is not limited to a plate form.

Various types of cubic structures such as a cube, a rectangular parallelopiped, a container shape, a box shape or the like have been considered.

In the Electro-optical Fluid composition 1116, inorganic/organic composite particles 1130, the structure of which are basically dispersed throughout an electrically insulating medium 1119. These particles are formed from a core member 1231, made from a high molecular organic compound, and a surface layer 1233 fabricated from an inorganic material 1232 (hereinafter referred to as an EA inorganic material) which provides an electric alignment and covers the surface of the core member 1231.

Various materials are commonly known as this type of EA inorganic material 1232.

Examples of preferred materials which can be given include inorganic ion exchange substances made from hydroxides of multivalent metals, types of hydrotalcites, acid salts of multivalent metals, hydroxyapatite, nashicon-type compounds, clay minerals, types of potassium titanate, heteropoly salts, or insoluble ferrocyanides, and silica gel, as well as electro-semiconductive inorganic materials. When this type of EA inorganic material 1232 is formed into a surface layer 1233 on the core member 1231 shown in FIG.12 made from a high molecular organic compound, the EA effect occurs on the Electro-optical Fluid composition 1116 shown in FIG.11.

In addition, it is preferred that the inorganic/organic composite particles 1130 be produced by a method whereby the surface layer 1233 is formed simultaneously with the core member 1231. Examples which can be given of a high molecular organic compound which can be used for the core member 1231 of the inorganic/organic composite particles 1130 include poly(metha)acrylic ester, copolymers of (metha)acrylic ester and styrene, polystyrene, polyethylene, polypropylene, nitryl rubber, ABS resin, nylon, polyvinylbutylate, ionomers, copolymers of ethylene and vinyl acetate, vinyl acetate resin, one type or two or more types mixed, or copolymers of polycarbonate resin, and the like.

Examples of an EA inorganic material 1232 suitable for use as the surface layer 1233 of the inorganic/organic composite particles 1130 include an inorganic ion exchange substance, an electro-semiconductive inorganic material, or silica gel.

Materials of this type exhibit a superior electric alignment when the solid particles are dispersed throughout the electrically insulating medium.

Examples of an inorganic ion exchange substance which can be given include (1) hydroxides of multivalent metals, (2) types of hydrotalcites, (3) acid salts of multivalent metals, (4) hydroxyapatite, (5) nashicon-type compounds, (6) clay minerals, (7) types of potassium titanate, (8) heteropoly salts, and (9) insoluble ferrocyanides.

The various inorganic ion exchange substances which can be used for the third embodiment shown in FIGs. 11-16 of the present invention is as same as that of the first and second embodiments as shown in FIGs.4-6 and FIGs.7-10 respectively. Therefore explanations of the various inorganic ion exchange substances are omitted here.

In addition, other desirable EA inorganic materials which can be used as the surface layer 1233 of the inorganic/organic composite particles 1130 are metal oxides wherein the electrical conductivity is 10³ to 10⁻¹¹ Ω⁻¹/cm at room temperature, metal hydroxides, hydroxides of metal oxides, inorganic ion exchange substances, or such materials subjected to doping with at least one type of metal, or where the existence of metal doping is immaterial, and materials wherein at least one type of the above is provided as an electro-semiconductive layer on another support member.

These other desirable EA inorganic materials are same as that of the first and second embodiments as shown in FIGs.4-6 and FIGs.7-10 respectively. Therefore the explanation of the other desirable EA inorganic materials are omitted.

The properties, effects, fabrication processes of the inorganic/organic composite particles of the third embodiment shown in FIGs. 11-16 are same as that of the first and second embodiments shown in FIGs.4-6 and FIGs.7-10 of the present invention described above. Therefore the explanations of these are omitted here.

Next, the control method of the amount of transmission light of the device A of the third embodiment shown in FIG. 11 will be explained in detail.

If an electric power 1122 is supplied to the standard transparent conductive layer 1125 and the opposed transparent conductive layer 1126, the branch-line sections 1125b of the standard transparent conductive layer 1125 and the branch-line sections 1126b of the opposed transparent conductive layer 1126 which are opposedly aligned in an upper and lower state, as shown in FIG. 15, become heteropolar. Therefore, a large number of inorganic/organic composite particles 1130 are combined throughout the Electro-optical Fluid composition 1116 in the form of a chain between the transparent substrates 1115 at right angles to each transparent substrate 1115. It is possible for chain combination members 1130' to be oriented in parallel, separated from one another, at the same time as these chain combination members 1130' are formed. Specifically, the inorganic/organic composite particles 1130 are dispersed throughout the electrically insulating medium 1119 in the range of a few wt% to approximately 20 wt%.

Because the total is small, a spacing rather wider than the diameter of the inorganic/organic composite particles 1130 is opened between like chain combination members 1130' when the particles 1130' are formed. As a result, light which is shone in the direction of the thickness of the storage member 1118 passes through the storage member 1118 without being completely damped.

Accordingly, it is possible to make the storage member 1118 almost transparent.

Next, the third wire 1124 is connected to the power source 1122 by means of a switch 1128. If power is supplied to the standard transparent conductive layer 1125 and the non-opposed transparent conductive layer 1127, the branch-line sections 1125b of the standard transparent conductive layer 1125 and the branch-line sections 1127b of the non-opposed transparent conductive layer 1127 become heteropolar, as shown in FIG. 15.

Therefore, the inorganic/organic composite particles 1130 can be aligned in the form of a sawblade side surface as shown in FIG. 16. In this state, the light directed into the storage member 1118 is blocked by the presence of the inorganic/organic composite particles 1130, therefore the storage member 1119 takes on an opaque state and a cloudy color depending on the color of the inorganic particles.

Accordingly, in the case where a titanium oxide related material is used as the EA inorganic material 1132 a cloudy white color can be obtained and part of the transmitted light is blocked. If the inorganic/organic composite particles 1130 are globular the light is scattered in all directions, therefore there is little concern about the light being focused in a specific direction. The storage member 1118 can be changed from a cloudy white state to a transparent state by the operation of the switch 1128, as outlined above. As a result, the amount of light transmitted can be regulated.

Accordingly, if, for example, a light transmission control device A shown in FIG. 11 of the above-mentioned configuration is used in the construction of a window glass, it becomes possible to easily switch from an cloudy state to a transparent state by switching a power supply ON or OFF so that the amount of light transmission via the window glass can be controlled.

Furthermore, it is possible to drive the light transmission control device A at an extremely small voltage of 0.1 to 5.0 kV/mm. Electric power of about 10 W/m² is therefore sufficient to drive the device and a considerable saving in power is provided.

In addition, the inorganic/organic composite particles 1130 can be completely aligned 10 to 20 seconds after applying electricity to the transparent conductive layers 1125 therefore the response characteristics are adequate. Also, if light transmission is controlled using the Electro-optical Fluid composition 1116, it is possible to control the amount of light transmission uniformly at all wave lengths without absorbing light of a specified frequency.

It is therefore possible to control the amount of light transmitted without wasting energy and with no concern about the generation of heat caused by light absorption.

Also, when an electric field is once applied and the inorganic/organic composite particles 1130 ... are oriented, this state is maintained even when the voltage on the inorganic/organic composite particles 1130 ... is cut for a short period. The electric field may therefore be applied intermittently, thus saving energy. Also, the period for maintaining the state of orientation of the inorganic/organic composite particles 1130 with no electric field depends on the kinematic viscosity of the electrically insulating medium 1116 in which the inorganic/organic composite particles 1130 and 1130' are dispersed, making suitable control possible. Specifically, the maintenance time can be shortened by reducing the kinematic viscosity of the electrically insulating medium 1116. Conversely, the maintenance time can be lengthened by increasing the kinematic viscosity of the electrically insulating medium 1116.

The light transmission control device A may comprise simple components in structure such as the transparent substrate 1115, the transparent conductive layer 1127, the sealing member 1120, and the Electro-optical Fluid composition 1116. The structure can therefore be simple, providing a manufactured unit cost considerably lower than that of a conventional device using liquid crystals.

Incidentally, the unit cost of this previously explained Electro-optical Fluid composition is about 1/1000 of that of a normal liquid crystal material, which is extremely inexpensive.

In addition, various control circuits and LSIs are required to drive the liquid crystals in a device which uses liquid crystals, but in the light transmission control device A of the present invention a simple configuration is acceptable, as previously explained, and the electric circuits and the like associated with the power supply can be replaced with the minimum one switch only.

The present invention is implemented in the above-mentioned embodiment using the transparent conductive layers 1125, 1126, 1127 shaped like comb blades. However, these transparent conductive layers are not limited to this shape. Other optional shapes are possible. For example, conductive layers formed in the shape of lattices, nets, cross-stitches, dot patterns, and various geometrical patterns are acceptable. In addition, opposing and non-opposing conductive layers are formed at the upper and lower transparent substrates 1115, and if it is possible for the inorganic/organic composite particles 1130 to be aligned in a direction inclined to the direction in which the light is being transmitted, conductive layers of any pattern or form may be used.

### FABRICATION EXAMPLE 1

A first fabrication embodiment of the EA fluid of the present invention will now be explained.

A mixture of 40 gm of titanium hydroxide (normal name: hydrated titanium, manufactured by Ishihara Sangyo Kaisha Ltd., C-II), which is an inorganic ion exchange substance, 300 gm of butyl acrylate, 100 gm of 1, 3-butylene-glycol-dimethacrylate, and a polymerization initiator was dispersed in 1800 ml of water containing potassium triphosphate as a dispersion stabilizer, and subjected to suspension polymerization under agitation for one hour at 60°C. The resulting product was filtered, acid-washed, washed with water, and then dried to provide the inorganic/organic composite particles. The inorganic/organic composite particles obtained in this manner were agitated in an air jet using an air jet agitator (Hybridizer manufactured by Nara Machinery Manufacturing Co., Ltd.), at 4000 rpm for 3 min to obtain white EA particles as surface-polished inorganic/organic composite particles. The moisture content of these inorganic/organic composite particles was 0.65 wt% measured by the Karl Fischer titration method. The average particle diameter was 16.4 µ m.

These EA particles were uniformly dispersed in silicone oils of various kinematic viscosities (TSF451 series, manufactured by Toshiba Silicon Co., Ltd.) to give various content ratios by wt%.

The device of the EA composition shown in FIG.4 is thus obtained by using the first fabrication example. In all cases of the first fabrication example the composition was white and opaque.

### EXPERIMENTAL EXAMPLE

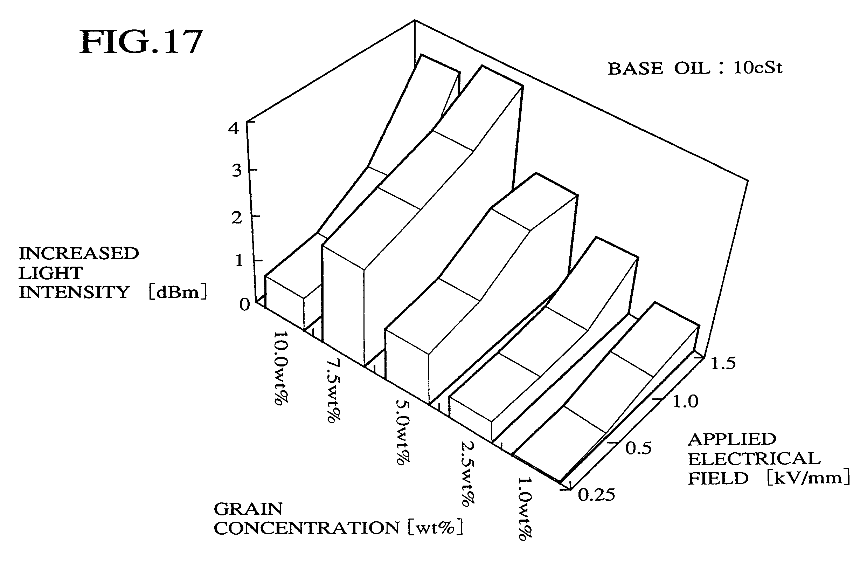

The results of light transmission control tests using the various Electro-optical Fluid
composition fluid compositions shown in FIGs.4-6, FIGs.6-10, and Figs. 11-16 obtained above are shown in FIG.17 to FIG.21.

In the tests, the intensity of light introduced into the transparent storage member and the intensity of light passing through the storage member were detected using a light sensor, and the results of comparisons were amplified and displayed as dBm.

In this case, at a light power produced at an amplification of 3.2 dBm, this signifies an amplification of 2.09 times; at a light power produced at an amplification of 4.2 dBm, this signifies an amplification of 2.63 times.

FIG. 17 shows the results of measurements of increased amount of transmission light with the concentration of inorganic/organic composite particles and the imposed electric field as parameters, in the case where the kinematic viscosity of the silicone oil (base oil) is 10 cSt.

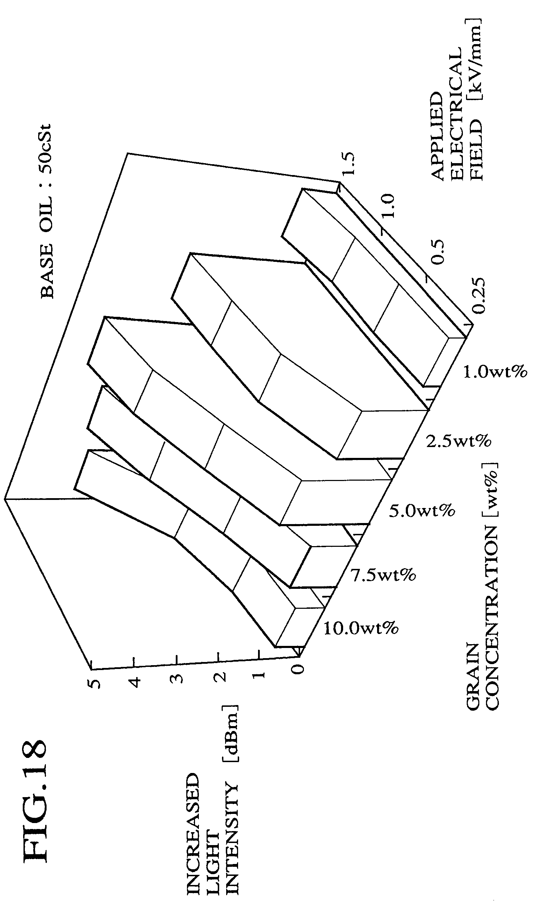

FIG. 18 shows the results of the same type of test where the kinematic viscosity of the silicone oil is 50 cSt.

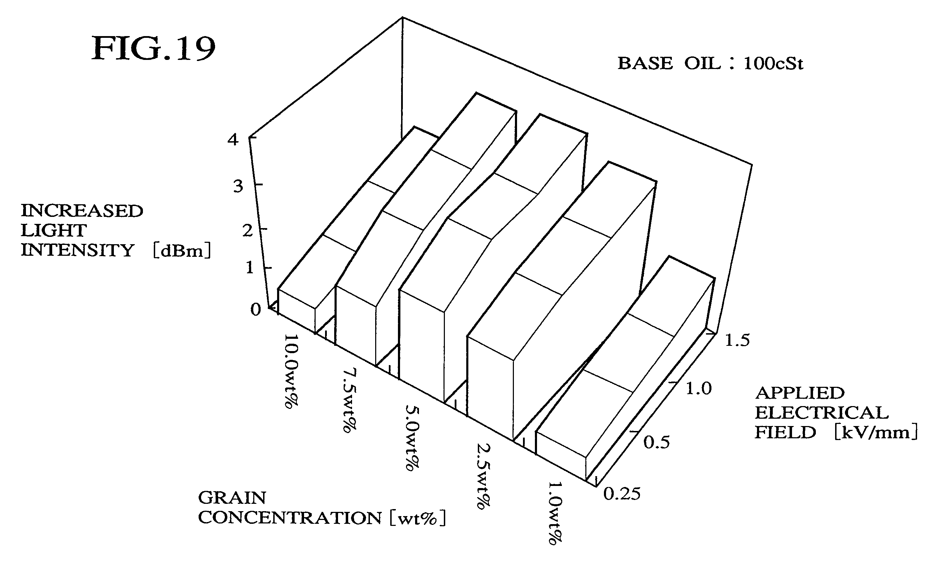

FIG. 19 shows the results of the same type of test where the kinematic viscosity of the silicone oil is 100 cSt.

From the results shown in FIGs. 17, 18, and 19, in concentrations of inorganic/organic composite particles of 0.5 to 1.5 wt%, when the strength of the imposed electric field is increased in the range from 0.25 to 1.5 kV/mm the dBm value of the amplified light also increases.

Accordingly, the control of the amount of light transmission can be verified by implementing the present invention.

Next, at an inorganic/organic composite particle concentration of 1.0 wt%, the percentage of light amplification is small even with the imposition of an electric field of 3 kV/mm.

Accordingly, it has been confirmed that a concentration of inorganic/organic composite particles of 2.5 wt% or greater is desirable.

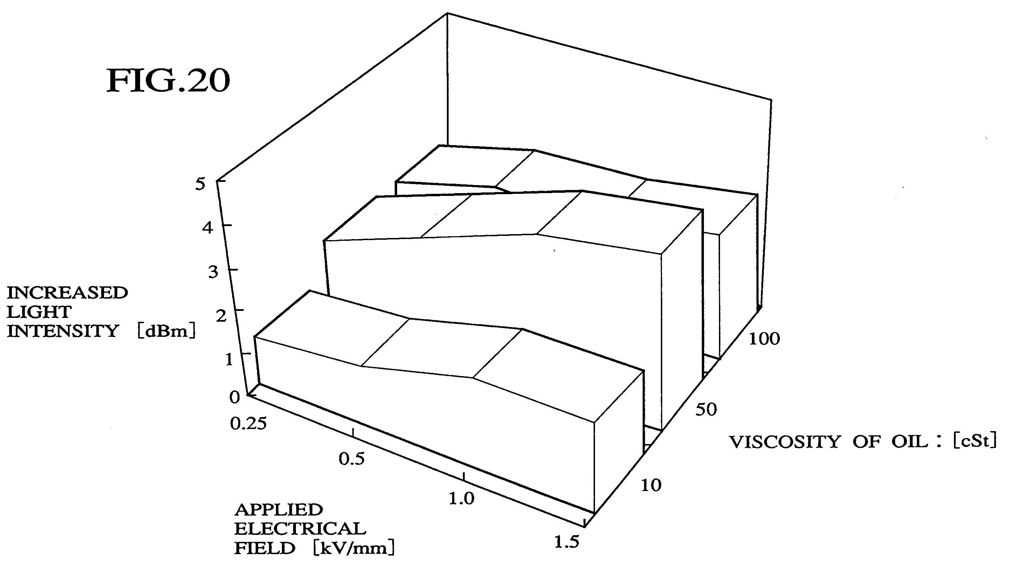

Next, FIG. 20 shows the results of tests measuring the amplified light in the case of a fixed inorganic/organic composite particle concentration of 5.0 wt%, with the kinematic viscosity of the silicone oil and the strength of the imposed electric field as parameters.

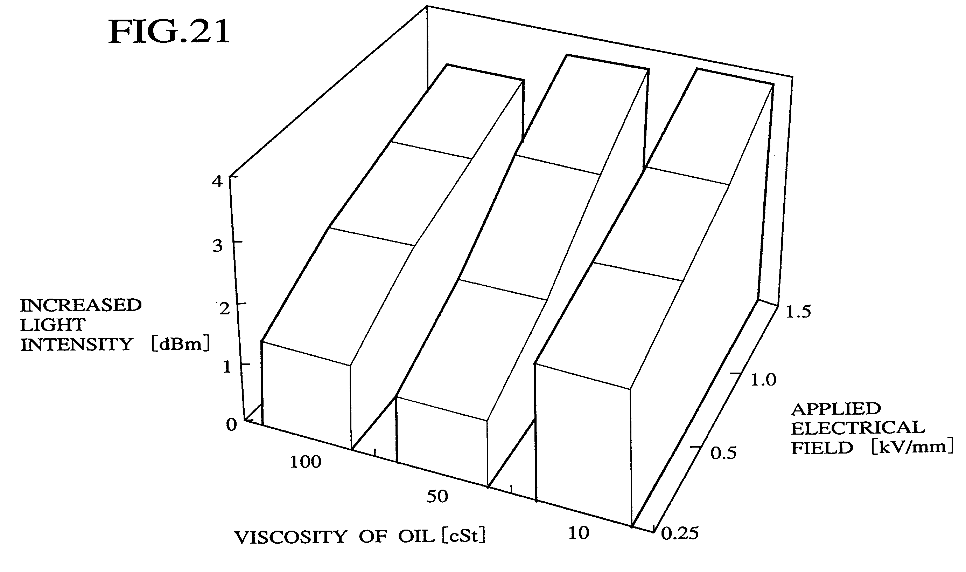

FIG. 21 shows the results of tests measuring the amplified light in the case of a fixed inorganic/organic composite particle concentration of 7.5 wt%, with the kinematic viscosity of the silicone oil and the strength of the imposed electric field as parameters.

From the results shown in FIG.20 and FIG.21, at all viscosities of the silicone oil it has been confirmed that the dMb value of the amplified light increases as the strength of the imposed electric field increases in the range from 0.5 to 3 kV/mm.

Accordingly, the control of the amount of light transmission can be verified by implementing the present invention. It has also been confirmed that an even greater light amplification is possible with the strength of the imposed electric field in the range from 0.25 to 1.5 kV/mm.

Next, Table 1 and Table 2 give the results of an investigation into various wave lengths of the transmitted light using a silicone oil (base oil) of a kinematic viscosity of 50 cSt, covering the light amplification obtained in the case where the concentration of inorganic/organic composite particles is 5.0 wt%.

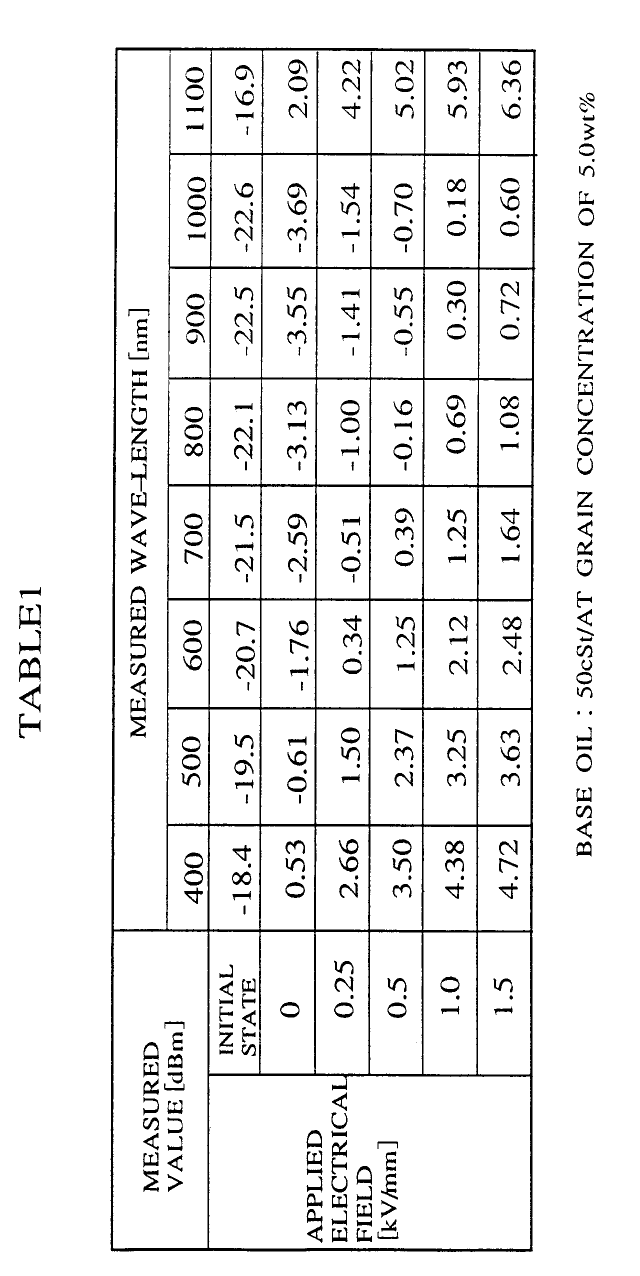

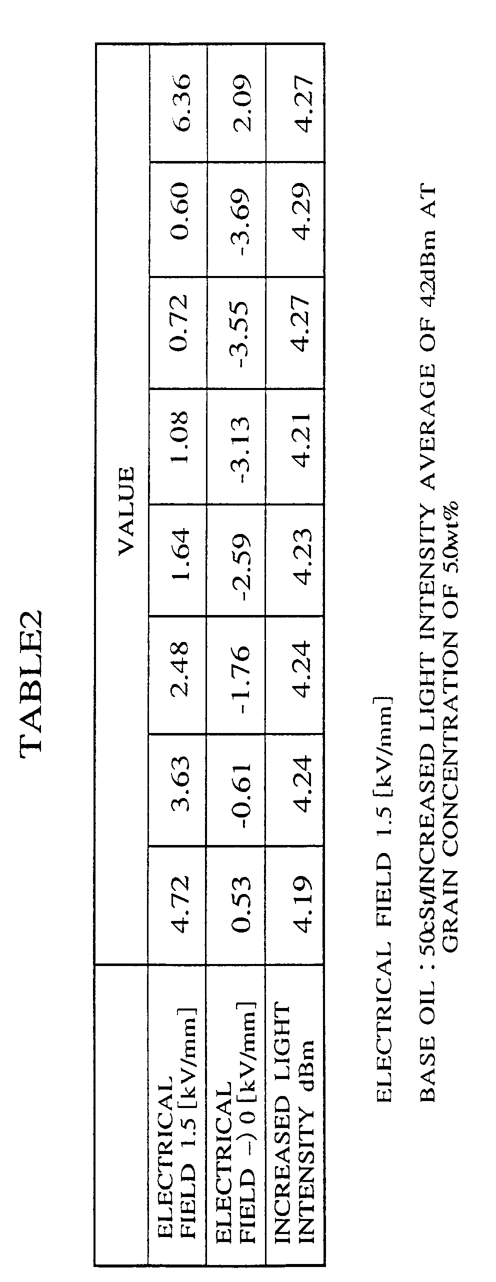

From the results shown in Table 1 and Table 2, when the amount of light transmitted is controlled using the light transmission control device of the present invention in the wide range of wave lengths from 400 to 1100 nm, a uniform amplified light is obtained.

### FABRICATION EXAMPLE 2

It is clearly seen that a uniform amount of light transmission adjustment is possible over a wide range wave length region. The wave length range of visible light is normally 480 to 780 nm, so it is therefore obvious that this EA composition exhibits uniform light transmission control performance over almost the full range of visible light and at longer wave lengths in the infrared region.

As a result, if the base oil used in the first embodiment is colorless and opaque, when the base oil is colored, the light transmission of this base oil is seen to be colored when transparent.

The fabrication example 2 of the present invention will now be explained.

In this example 2,80 gm of silica gel with an average particle diameter of 0.04 µ m (Escoat M-40005, manufactured by Nippon Steel Chemical Co., Ltd.) were substituted for the 40 gm of titanium hydroxide used for the EA particles of the first embodiment, to obtain inorganic/organic composite particles prior to surface polishing as in the first embodiment. These composite particles were agitated in an air jet at 6000 rpm for 5 min to obtain white EA particles as surface-polished inorganic/organic composite particles. The moisture content of these inorganic/organic composite particles was 0.91 wt% measured by the Karl Fischer titration method. The average particle diameter was 13.5 µ m.

These EA particles were dispersed in silicone oil in the same manner as the particles of the first embodiment to obtain the EA composition of the second embodiment. In all cases the composition was white and opaque.

Each of these samples was interposed between the transparent electrodes 10-10 in the same manner as with the embodiment E1 and changes in light transmission were observed by turning the voltage ON and OFF. In all cases, when the voltage was OFF the surface of the electrode plate was white and opaque; in all cases, when the voltage was ON this condition changed to transparent.

### FABRICATION EXAMPLE 3

A third fabrication example 3 of the present invention will now be explained. In this fabrication example 3, a mixture of 32 gm of titanium hydroxide and 8 gm of phthalocyanine blue (cyanine blue S-32 manufactured by Dainichi seika kougiyou Co., Ltd.) was substituted for the 40 gm of titanium hydroxide used to obtain inorganic/organic composite particles prior to surface polishing as in the first fabrication example 1. These composite particles were agitated in an air jet in the same manner as in the first embodiment to obtain blue, surface-polished EA particles. The moisture content of these EA particles was 0.91 wt% measured by the Karl Fischer titration method. The average particle diameter was 14.0 µ m. These EA particles were dispersed in silicone oil in the same manner as the particles of the first fabrication example 1 to obtain the EA composition of the third fabrication example 3.

In all cases the composition was blue and opaque. Each of these samples was interposed between the transparent electrodes 510 in the same manner as with the embodiment E1 and changes in light transmission were observed by turning the voltage ON and OFF. In all cases, when the voltage was OFF the surface of the electrode plate was blue and opaque; in all cases, when the voltage was ON this condition changed to transparent. As a result, even when the inorganic/organic composite particles are colored blue, the optical characteristics can be controlled in the same manner as in the case of the white inorganic/organic composite particles, and it can be understood that the particles of this embodiment can be changed from blue and opaque to transparent.

### FABRICATION EXAMPLE 4

A fourth fabrication example 4 of the present invention will now be explained. In the fabrication example 4, a mixture of 32 gm of titanium hydroxide and 8 gm of a fast yellow pigment (NL Fast Yellow 5G(S) manufactured by Daimchiseika kougyou Co., Ltd.) was substituted for the 40 gm of titanium hydroxide used to obtain inorganic/organic composite particles prior to surface polishing as in the first fabrication example 1. These composite particles were agitated in an air jet in the same manner as in the first fabrication example 1 to obtain yellow, surface-polished EA particles.

The moisture content of these EA particles was 0.89 wt% measured by the Karl Fischer titration method. The average particle diameter was 14.2 µ m. These EA particles were dispersed in silicone oil in the same manner as the particles of the first fabrication example 1 to obtain the EA composition of the fourth fabrication example 4. In all cases the composition was yellow and opaque. Each of these samples was interposed between the transparent electrodes 10-10 in the same manner as with the embodiment E1 and changes in light transmission were observed by turning the voltage ON and OFF. In all cases, when the voltage was OFF the surface of the electrode plate was yellow and opaque; in all cases, when the voltage was ON this condition changed to transparent.

As a result, if the inorganic/organic composite particles are colored yellow, and it can be understood that the optical characteristics change from yellow and opaque to transparent when the voltage is switched ON and OFF.

### FABRICATION EXAMPLE 5

A fifth fabrication example 5 of the present invention will now be explained. In this fabrication example 5, a mixture of 20 gm of titanium hydroxide and 20 gm of black triiron tetraoxide, which is a electro-semiconductor inorganic material, is substituted for the 40 gm of titanium hydroxide used to obtain inorganic/organic composite particles prior to surface polishing in the first fabrication example 1. These composite particles were agitated in an air jet in the same manner as in the first fabrication example 1 to obtain gray-black EA particles. The moisture content of these EA particles is 0.66 wt% measured by the Karl Fischer titration method. The average particle diameter is 15.4 µ m. These EA particles were dispersed in silicone oil in the same manner as the particles of the first fabrication example 1 to obtain the EA composition. In all cases the composition is black. Each of these samples is interposed between the transparent electrodes 10-10 in the same manner as with the first embodiment and changes in light transmission were observed by turning the voltage ON and OFF.

In all cases, when the voltage is OFF the surface of the electrode plate is black and opaque; in all cases, when the voltage is ON this condition changed to transparent. As a result, if the inorganic/organic composite particles are colored black, it can be understood that the optical characteristics change from black and opaque to transparent when the voltage is switched ON and OFF.

### FABRICATION EXAMPLE 6

A sixth fabrication example 6 of the present invention will now be explained. In this fabrication example 6, 40 gm of red ferric oxide, which is a electro-semiconductor inorganic material, were substituted for the 40 gm of titanium hydroxide used to obtain inorganic/organic composite particles prior to surface polishing as in the first fabrication example 1. These composite particles were agitated in an air jet in the same manner as in the first fabrication example 1 to obtain red-orange EA particles. The moisture content of these EA particles is 0.76 wt% measured by the Karl Fischer titration method.

The average particle diameter is 13.9 µ m. These EA particles were dispersed in silicone oil in the same manner as the particles of the first embodiment to obtain the EA composition of the sixth fabrication example 6. In all cases the composition is red. Each of these samples is interposed between the transparent electrodes 10-10 in the same manner as with the first fabrication example 1 and changes in light transmission were observed by tuning the voltage ON and OFF.

In all cases, when the voltage is OFF the surface of the electrode plate is red and opaque; in all cases, when the voltage is ON this condition changed to transparent. Through the medium of the above-mentioned embodiments E1-E6, it is clearly shown that the EA composition of the present invention, when an electric field is not applied, is opaque and colored containing white and black coloring, depending on the characteristic color of the EA particles, and when an electric field is imposed on this EA composition, depending on the strength of the electric field, the optical characteristics can be changed to increase the transparency.

The EA composition of the present invention contains EA particles throughout an electrically insulating medium, therefore if an electrical field is applied the EA particles are oriented in the direction of the field.

As a result the amount of light transmission can be controlled. In this control the medium of the EA composition exhibits electrically insulating properties, therefore an extremely small power consumption is possible. In particular, in the case where the EA particles are formed as inorganic/organic composite particles comprising a core medium made from a high molecular organic compound and a surface layer made from an EA inorganic material, a practical EA composition with high storage stability is obtained. If the surface layer or the core member or both include a colorant, the opaque color of the composition can be any optional color when the electric field is not imposed. The EA composition of the present invention with these advantages can be profitably used as a surface light shutter and in various types of display devices and the like by turning the electric field OFF and ON.

Using the present invention as described above, it is possible to orient solid particles by imposing an electric field on an Electro-optical Fluid composition stored in a storage member.

As a result, it is possible to control the amount of light passing through the transparent section of the storage member. Therefore the amount of light passing through the transparent section of the storage member can be increased or decreased by a simple operation which involves merely controlling the supply of electricity. With the present invention it is possible to drive the device at an extremely small voltage of 0.1 to 5.0 kV/mm, therefore electric power of about 10 W/m₂ is sufficient to drive the device resulting in a considerable saving in power.

In addition, the solid particles can be completely aligned in 10 to 20 seconds by applying electricity and imposing an electric field on the Electro-optical Fluid composition, therefore the response characteristics are adequate.

Also, when light transmission is controlled using the Electro-optical Fluid composition, it is possible to control the amount of light transmission uniformly over the entire wave length region without absorbing light of a specified frequency. It is therefore possible to control the amount of light transmitted over a wide wave length region without wasting energy.

When an electric field is once impressed and the solid particles are oriented, this state is maintained even when the voltage on the solid particles is cut for a short period. The electric field may therefore be impressed intermittently with resultant energy savings. If the storage member comprises a transparent substrate, a transparent conductive layer, a sealing member, and an Electro-optical Fluid composition, the structure is simple so that a manufactured unit cost can be provided which is considerably lower than that of a conventional device using liquid crystals. The unit cost of this previously explained Electro-optical Fluid composition is, incidentally, about 1/1000 of that of a normal liquid crystal material, which is extremely inexpensive. In addition, various control circuits and LSIs are required to drive the liquid crystals in a device which uses liquid crystals, but in the present invention, as previously explained, a simple structure can be provided, and the electric circuits and the like related to the power supply can be replaced with a minimum one switch only, so that an extremely concise configuration is possible.

The kinematic viscosity of the electrically insulating medium of the optically functional fluid composition can be freely set in the range of from 1 to 3000 10 cSt, and it is desirable that the concentration of the solid particles in the electrically insulating medium can be in the range of 0.5 to 15% by weight. If in this %wt range, a high light transmission control performance can be obtained. In addition, an extremely low voltage in the range of 0.1 to 5.0 kV/mm applied to the Electro-optical Fluid composition is sufficient. Electric power of about 10 W/m2 is sufficient to drive the device so that a considerable saving in power is provided.

Using the present invention as described above, it is possible to orient the solid particles by imposing an electric field on an Electro-optical Fluid composition stored in a storage member. Then, if power is supplied to the standard transparent conductive layer and the opposed transparent conductive layer, it is possible to increase the amount of light transmitted by aligning the solid particles or the inorganic/organic composite particles in the direction of light transmission. If power is supplied to the standard transparent conductive layer and the non-opposed transparent conductive layer, it is possible to decrease the amount of light transmitted by aligning the solid particles or the inorganic/organic composite particles at an angle to the direction of light transmission. It is therefore possible to easily control the amount of light transmitted by suitably switching the power provided to the transparent conductive layers. The Electro-optical Fluid composition of the present invention can be driven by an extremely small voltage, therefore a small amount of electric power is sufficient to drive the device, making it possible to produce a simple, power-saving device. In addition, the alignment of the inorganic/organic composite particles can be completely controlled in from a few sec to 10 sec by applying electricity and imposing an electric field on the Electro-optical Fluid composition. Adequate response characteristics are therefore obtained.

It will be apparent that any modifications and variations may be implemented without departing from the scope of the novel concept of this invention. Therefore it is intended by the appended claims to cover all such modifications and variations which fall within the true spirit and scope of the invention.

## Claims

1. An Electro-optical Fluid composition comprising:
an electrically insulating medium(41); and
solid particles (42) having an electric alignment within the electrically insulating medium.

2. An Electro-optical Fluid composition as claimed in claim 1, wherein:
the solid particles (42) comprise:
a core member (43) comprising an organic polymeric compound; and
a surface layer (shell) (45) comprising an inorganic material having an electric alignment.

3. An Electro-optical Fluid composition as claimed in claim 2, wherein:
the inorganic material having an electric alignment is of at least one type selected from a group made up of an inorganic ion exchange substance, silica gel, and an electro-semiconductive inorganic material.

4. An Electro-optical Fluid composition as claimed in claim 2, wherein:
the surface layer (45) is made up of a material containing an inorganic material having an electric alignment and colored particles.

5. An Electro-optical Fluid composition as claimed in claim 3, wherein:
the surface layer (45) is made up of a material containing an inorganic material having an electric alignment and colored particles.

6. An Electro-optical Fluid composition as claimed in claim 2, wherein:
the core member (43) contains a pigment.

7. An Electro-optical Fluid composition as claimed in claim 4, wherein:
the core member (43) contains a pigment.

8. An Electro-optical Fluid composition as claimed in claim 5, wherein:
the core member (43) contains a pigment.

9. An Electro-optical Fluid composition as claimed in claim 5, wherein:
the electrically insulating medium (41) comprises one of or mixture of diphenyl chloride, butyl sebacate, aromatic polycarbonate higher alcohol ester, halophenyl alkyl ether, transformer oils, paraffin chloride salts, fluorinated oils, silicone or fluoro-silicone oils, or the like. Mixtures of these can also be used.

10. An Electro-optical Fluid composition as claimed in claim 5, wherein:
a range of the kinematic viscosity of the electrically insulating medium (41) is 10 to 1000 cSt.

11. An Electro-optical Fluid composition as claimed in claim 1, wherein: the concentration of the solid particles (42) throughout the electrically insulating medium (41) is in the range of 0.5 to 15 percent by weight.

12. A device for controlling the amount of light transmission comprising:
an Electro-optical Fluid composition (716) containing, within an electrically insulating medium (719), solid particles (730) having an electric alignment;
a hollow storage member (718), of which at least one part of two opposing surfaces is transparent, for storing the Electro-optical Fluid composition (716); and
a transparent conductive layer (717) of which at least the transparent portion of the hollow storage member (718) is covered.

13. A device for controlling the amount of light transmission comprising:
an Electro-optical Fluid composition (716) formed from inorganic/organic composite particles comprising:
a core member (831) comprising an organic polymeric compound; and
an outer layer (shell) (833) of an inorganic material having an electric alignment, dispersed throughout an electrically insulating medium;
a hollow storage member (718), of which at least one part of two opposing surfaces is transparent, for storing the Electro-optical Fluid composition (716); and
a transparent conductive layer (717) of which at least the transparent portion of the storage member is covered.

14. A device for controlling the amount of light transmission comprising:
an Electro-optical Fluid composition (716) formed from inorganic and organic composite particles (730) comprising:
a core member (831) comprising an organic polymeric compound; and
an outer layer (833) comprising either an inorganic ion exchange substance or silica gel or an electro-semiconductive inorganic material dispersed throughout an electrically insulating medium;
a hollow storage member (718), of which at least one part of two opposing surfaces is transparent, for storing the Electro-optical Fluid composition (716); and
a transparent conductive layer (717) of which at least the transparent portion of the storage member (718) is covered.

15. A device for controlling the amount of light transmission as claimed in claim 12, wherein:
the storage member (718) comprises:
a pair of transparent substrates (715) opposedly positioned;
a sealing member (720) forming a storage space between the transparent substrates (715) by connecting the pair of transparent substrates; and
an electrode (721, 722) formed on the outer peripheral section of the transparent substrates (715);
wherein the transparent conductive layer (717) is formed joined to the electrode section (721, 722) covering the surface relatively opposite the pair of opposing transparent substrates.

16. A device for controlling the amount of light transmission as claimed in claim 13, wherein:
the storage member (718) comprises:
a pair of transparent substrates (715) opposedly positioned;
a sealing member (720) forming a storage space between the transparent substrates (715) by connecting the pair of transparent substrates; and
an electrode (721, 722) formed on the outer peripheral section of the transparent substrates (715);
wherein the transparent conductive layer (717) is formed joined to the electrode section (721, 722) covering the surface relatively opposite the pair of opposing transparent substrates (715).

17. A device for controlling the amount of light transmission as claimed in claim 14, wherein:
the storage member (718) comprises:
a pair of transparent substrates (715) opposedly positioned;
a sealing member (720) forming a storage space between the transparent substrates by connecting the pair of transparent substrates (715); and
an electrode (721, 722) formed on the outer peripheral section of the transparent substrates (715);
wherein the transparent conductive layer (717) is formed joined to the electrode section covering the surface relatively opposite the pair of opposing transparent substrates (715).

18. A device for controlling the amount of light transmission as claimed in claims 12, wherein:
the kinematic viscosity of the electrically insulating medium (719) is in the range of 1 to 3000 cSt.

19. A device for controlling the amount of light transmission as claimed in claims 13, wherein:
the kinematic viscosity of the electrically insulating medium (719) is in the range of 1 to 3000 cSt.

20. A device for controlling the amount of light transmission as claimed in claims 14, wherein:
the kinematic viscosity of the electrically insulating medium (719) is in the range of 1 to 3000 cSt.

21. A device for controlling the amount of light transmission as claimed in claims 15, wherein:
the kinematic viscosity of the electrically insulating medium (719) is in the range of 1 to 3000 cSt.

22. A device for controlling the amount of light transmission as claimed in claims 12, wherein:
the concentration of the particles (730) throughout the electrically insulating medium (719) is in the range of 0.5 to 15 percent by weight.

23. A device for controlling the amount of light transmission as claimed in claims 13, wherein:
the concentration of the particles (730) throughout the electrically insulating medium (719) is in the range of 0.5 to 15 percent by weight.

24. A device for controlling the amount of light transmission as claimed in claims 14, wherein:
the concentration of the particles (730) throughout the electrically insulating medium (719) is in the range of 0.5 to 15 percent by weight.

25. A device for controlling the amount of light transmission as claimed in claims 15, wherein:
the concentration of the particles (730) throughout the electrically insulating medium (719) is in the range of 0.5 to 15 percent by weight.

26. A device for controlling the amount of light transmission as claimed in claims 12, wherein:
the voltage applied to the particles (730) throughout the Electro-optical Fluid composition (716) from the transparent conductive layer (717) is set in the range of 0.1 to 5.0 kV/mm.

27. A device for controlling the amount of light transmission as claimed in claims 13, wherein:
the voltage applied to the particles (730) throughout the Electro-optical Fluid composition (716) from the transparent conductive layer (717) is set in the range of 0.1 to 5.0 kV/mm.

28. A device for controlling the amount of light transmission as claimed in claims 14, wherein:
the voltage applied to the particles throughout the Electro-optical Fluid composition (716) from the transparent conductive layer (717) is set in the range of 0.1 to 5.0 kV/mm.

29. A device for controlling the amount of light transmission as claimed in claims 15, wherein:
the voltage applied to the particles (730) throughout the Electro-optical Fluid composition (716) from the transparent conductive layer (717) is set in the range of 0.1 to 5.0 kV/mm.

30. A device for controlling the amount of light transmission as claimed in claims 18, wherein:
the voltage applied to the particles (730) throughout the Electro-optical Fluid composition (716) from the transparent conductive layer (717) is set in the range of 0.1 to 5.0 kV/mm.

31. A device for controlling the amount of light transmission as claimed in claims 22, wherein:
the voltage applied to the particles (730) throughout the Electro-optical Fluid composition from the transparent conductive layer (717) is set in the range of 0.1 to 5.0 kV/mm.

32. A method for controlling the amount of light transmission for an Electro-optical Fluid composition (716) containing, within a medium (719), solid particles (730) having an electric alignment is stored inside the hollow storage member (718), of which at least one part is transparent, comprising:
applying an electric field to the Electro-optical Fluid composition (716) to control the orientation of the solid particles (730) in order to control the amount of light transmitted through the transparent portion of the storage member (718).

33. A method for controlling the amount of light transmission for an Electro-optical Fluid composition (716) formed from inorganic and organic composite particles (730) dispersed throughout an electrically insulating medium (719), comprising a core member (831) comprising an organic polymeric compound and an outer layer (833) of an inorganic material having an electric alignment, is stored inside the hollow storage member (718), of which at least one part is transparent, comprising:
applying an electric field to the Electro-optical Fluid composition (716) to control the orientation of the inorganic and organic composite particles (730) in order to control the amount of light transmitted through the transparent portion of the storage member (718).

34. A method for controlling the amount of light transmission for an Electro-optical Fluid composition (716) formed from inorganic and organic composite particles (730) dispersed throughout an electrically insulating medium (719), comprising a member formed from a high molecular organic compound and an outer layer made up of an inorganic ion exchange substance, is stored inside the hollow storage member, of which at least one part is transparent, comprising:
applying an electric field to the Electro-optical Fluid composition (716) to control the orientation of the inorganic and organic composite particles (730) in order to control the amount of light transmitted through the transparent portion of the storage member (718).

35. A method for controlling the amount of light transmission as claimed in claims 32, wherein:
the kinematic viscosity of the electrically insulating medium (719) is in the range of 1 to 3000 cSt.

36. A method for controlling the amount of light transmission as claimed in claims 33, wherein:
the kinematic viscosity of the electrically insulating medium (719) is in the range of 1 to 3000 cSt.

37. A method for controlling the amount of light transmission as claimed in claims 34, wherein:
the kinematic viscosity of the electrically insulating medium (719) is in the range of 1 to 3000 cSt.

38. A method for controlling the amount of light transmission as claimed in claims 32, wherein:
the concentration of the particles (730) throughout the electrically insulating medium (719) is in the range of 0.5 to 15 percent by weight.

39. A method for controlling the amount of light transmission as claimed in claims 33, wherein:
the concentration of the particles (730) throughout the electrically insulating medium (719) is in the range of 0.5 to 15 percent by weight.

40. A method for controlling the amount of light transmission as claimed in claims 34, wherein:
the concentration of the particles (730) throughout the electrically insulating medium (719) is in the range of 0.5 to 15 percent by weight.

41. A method for controlling the amount of light transmission as claimed in claims 35, wherein:
the concentration of the particles (730) throughout the electrically insulating medium (719) is in the range of 0.5 to 15 percent by weight.

42. A method for controlling the amount of light transmission as claimed in claims 32, wherein:
the voltage applied to the particles (730) throughout the Electro-optical Fluid composition (716) from the transparent conductive layer (717) is set in the range of 0.1 to 5.0 kV/mm.

43. A method for controlling the amount of light transmission as claimed in claims 33, wherein:
the voltage applied to the particles (730) throughout the Electro-optical Fluid composition (716) from the transparent conductive layer (717) is set in the range of 0.1 to 5.0 kV/mm.

44. A method for controlling the amount of light transmission as claimed in claims 34, wherein:
the voltage applied to the particles (730) throughout the Electro-optical Fluid composition (716) from the transparent conductive layer (717) is set in the range of 0.1 to 5.0 kV/mm.

45. A method for controlling the amount of light transmission as claimed in claims 35, wherein:
the voltage applied to the particles (730) throughout the Electro-optical Fluid composition (716) from the transparent conductive layer (717) is set in the range of 0.1 to 5.0 kV/mm.

46. A method for controlling the amount of light transmission as claimed in claims 38, wherein:
the voltage applied to the particles (730) throughout the Electro-optical Fluid composition (716) from the transparent conductive layer (717) is set in the range of 0.1 to 5.0 kV/mm.

47. A device for controlling the amount of light transmission comprising:
an Electro-optical Fluid composition (1116) containing, within an electrically insulating medium (1119), solid particles (1130) having an electric alignment;
a hollow storage member (1118), of which at least one part of two opposing surfaces is transparent, for storing the Electro-optical Fluid composition (1116);
a transparent conductive layer (1125, 1126) of which at least the transparent portion of the hollow storage member (1118) is covered, wherein one or more standard transparent conducting layers on one surface of the storage member (1118) are subdivided; one or more opposing transparent conducting layers oppose the standard transparent conducting layers on the other surface of the storage member (1118); one or more non-opposing transparent conducting layers is formed on a part which does not form an opposing transparent conducting layer on the other surface of the storage member; and
a switch (1128) for switching a supply of electricity to the standard transparent conducting layer and the opposing transparent conducting layers, or a supply of electricity to the standard transparent conducting layer and the non-opposing transparent conducting layers (1126, 1127).

48. A device for controlling the amount of light transmission comprising:
an Electro-optical Fluid composition (1116) formed from inorganic/organic composite particles (1130) comprising a core member (1231) comprising an organic polymeric compound and an outer layer (1233) of an inorganic material having an electric alignment, dispersed throughout an electrically insulating medium (1119);
a hollow storage member (1118), of which at least one part of two opposing surfaces is transparent, for storing the Electro-optical Fluid composition (1116); and a transparent conductive layer (1125, 1126) of which at least the transparent portion of the storage member is covered, wherein one or more standard transparent conducting layers on one surface of the storage member are subdivided, one or more opposing transparent conducting layers opposes the standard transparent conducting layer on the other surface of the storage member (1118), one or more non-opposing transparent conducting layers is formed on a part which does not form an opposing transparent conducting layer on the other surface of the storage member (1118); and
a switch (1128) for switching a supply of electricity to the standard transparent conducting layer and the opposing transparent conducting layer or a supply of electricity to the standard transparent conducting layer and the non-opposing transparent conducting layer (1126, 1127).

49. A device for controlling the amount of light transmission comprising:
an Electro-optical Fluid composition (1116) formed from inorganic/organic composite particles (1130) comprising a core member (1231) comprising an organic polymeric compound and an outer layer (shell) (1233) comprising either an inorganic ion exchange substance or silica gel or an electro-semiconductive inorganic material;
a hollow storage member (1118), of which at least one part of two opposing surfaces is transparent, for storing the Electro-optical Fluid composition (1116); and
a transparent conductive layer (1125, 1126) of which at least the transparent portion of the storage member (1118) is covered wherein one or more standard transparent conducting layers on one surface of the storage member are subdivided; one or more opposing transparent conducting layers opposes the standard transparent conducting layer on the other surface of the storage member; one or more non-opposing transparent conducting layers is formed on a part which does not form an opposing transparent conducting layer on the other surface of the storage member; and
a switch (1128) for switching a supply of electricity to the standard transparent conducting layer and the opposing transparent conducting layer or a supply of electricity to the standard transparent conducting layer and the non-opposing transparent conducting layer (1126, 1127).

50. A device for controlling the amount of light transmission as claimed in claims 47, wherein:
the storage member (1118) comprises:
a pair of transparent substrates (1115) opposedly positioned; and
a sealing member (1120) forming a storage space between the transparent substrates by connecting the pair of transparent substrates, wherein the transparent conductive layer is formed on a surface relatively opposing the pair of opposing transparent substrates.

51. A device for controlling the amount of light transmission as claimed in claims 48, wherein:
the storage member (1118) comprises:
a pair of transparent substrates (1115) opposedly positioned; and
a sealing member (1120) forming a storage space between the transparent substrates by connecting the pair of transparent substrates, wherein the transparent conductive layer is formed on a surface relatively opposing the pair of opposing transparent substrates.

52. A device for controlling the amount of light transmission as claimed in claims 49, wherein:
the storage member (1118) comprises:
a pair of transparent substrates (1115) opposedly positioned; and
a sealing member (1120) forming a storage space between the transparent substrates by connecting the pair of transparent substrates, wherein the transparent conductive layer is formed on a surface relatively opposing the pair of opposing transparent substrates.

53. A device for controlling the amount of light transmission as claimed in claims 47, wherein:
the standard transparent conducting layer (1125) is a comb-shaped conducting layer covering a transparent portion of one surface of the storage member (1118);
the opposing transparent conducting layers (1126) are comb-shaped conducting layers covering a transparent portion of another surface of the storage member; and
the non-opposing transparent conducting layers (1127) are comb-shaped conducting layers covering and mutually engaging the opposing transparent conducting layers.

54. A device for controlling the amount of light transmission as claimed in claims 48, wherein:
the standard transparent conducting layer (1125) is a comb-shaped conducting layer covering a transparent portion of one surface of the storage member;
the opposing transparent conducting layers (1126) are comb-shaped conducting layers covering a transparent portion of another surface of the storage member; and
the non-opposing transparent conducting layers (1127) are comb-shaped conducting layers covering and mutually engaging the opposing transparent conducting layers.

55. A device for controlling the amount of light transmission as claimed in claims 49, wherein:
the standard transparent conducting layer (1125) is a comb-shaped conducting layer covering a transparent portion of one surface of the storage member;
the opposing transparent conducting layers (1126) are comb-shaped conducting layers covering a transparent portion of another surface of the storage member; and
the non-opposing transparent conducting layers (1127) are comb-shaped conducting layers covering and mutually engaging the opposing transparent conducting layers.

56. A device for controlling the amount of light transmission as claimed in claims 50, wherein:
the standard transparent conducting layer (1125) is a comb-shaped conducting layer covering a transparent portion of one surface of the storage member;
the opposing transparent conducting layers (1126) are comb-shaped conducting layers covering a transparent portion of another surface of the storage member; and
the non-opposing transparent conducting layers (1127) are comb-shaped conducting layers covering and mutually engaging the opposing transparent conducting layers.

57. A method for controlling the amount of light transmission wherein the Electro-optical Fluid composition (1116) containing, throughout an electrically insulating medium (1119), solid particles (1130) having an electric alignment is stored in the hollow storage member (1118), of which at least one part of two opposing surfaces is transparent, comprising:
applying an electric field to the Electro-optical Fluid composition (1116); and
controlling the amount of light transmitted through the transparent portion of the storage member (1118) by controlling the orientation of the solid particles (1130), wherein
by applying a positive potential to one and by applying a negative potential to the other of the two opposing surfaces, and solid particles (1130) are oriented in parallel in the direction of the light transmission at the two opposing surfaces, or, by applying partially a positive potential to one and by partially applying a negative potential to the other of the two opposing surfaces, mutually impressed and positioned, and the solid particles are oriented between the two opposing surfaces in a slanting direction with respect to the direction of light transmission.

58. A method for controlling the amount of light transmission wherein the Electro-optical Fluid composition (1116) wherein inorganic/organic composite particles (1130) comprising a core member (1231) comprising an organic polymeric compound and an outer layer (shell) (1233) of an inorganic material having an electric alignment, is stored inside a hollow storage member (1118), of which at least one part of two opposing surfaces is transparent, comprising:
applying an electric field to the Electro-optical Fluid composition (1116); and
controlling the amount of light transmitted through the transparent portion of the storage member (1118) by controlling the orientation of the particles (1130), wherein
by applying a positive potential to one and a negative potential and to the other of the two opposing surfaces, and the particles (1130) are oriented in parallel in the direction of the light transmission at the two opposing surfaces, or, by applying partially a positive potential to one and applying partially a negative potential to the other of the two opposing surfaces, mutually impressed and positioned, and the particles are oriented between the two opposing surfaces in a slanting direction with respect to the direction of light transmission.

59. A method for controlling the amount of light transmission wherein the Electro-optical Fluid composition (1116) wherein inorganic/organic composite particles (1130) comprising a core member (1231) comprising an organic polymeric compound and an outer layer (shell) (1233) comprising an inorganic ion exchange substance, is stored inside a hollow storage member (1118), of which at least one part of two opposing surfaces is transparent;
applying an electric field to the Electro-optical Fluid composition (1116); and
controlling the amount of light transmitted through the transparent portion of the storage member (1118) by controlling the orientation of the particles (1130); and
by applying a positive potential to one and by applying a negative potential to the other of the two opposing surfaces, and the particles (1130) are oriented in parallel in the direction of the light transmission at the two opposing surfaces, or, by applying partially a positive potential to one and by applying partially a negative potential the other of the two opposing surfaces, mutually impressed and positioned, and the particles (1130) are oriented between the two opposing surfaces in a slanting direction with respect to the direction of light transmission.
